(19) Europäisches Patentamt / European Patent Office / Office européen des brevets

(11) **EP 4 622 153 A1**

(12) **EUROPEAN PATENT APPLICATION**

(43) Date of publication:
24.09.2025 Bulletin 2025/39

(21) Application number: 25164679.0

(22) Date of filing: 19.03.2025

(51) International Patent Classification (IPC):
*H04L 1/1812* (2023.01)      *H04L 1/1822* (2023.01)

(52) Cooperative Patent Classification (CPC):
H04L 1/1822; H04L 1/1812

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.03.2024  IN 202441020894
17.03.2025  US 202519081106

(71) Applicant: **Mavenir Systems, Inc.
Richardson, TX 75081 (US)**

(72) Inventors:
• **Kaimalettu, Sunil
560045 Bangalore (IN)**
• **Taneja, Mukesh
560037 Bangalore (IN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **PERFORMANCE OPTIMIZATIONS FOR EMMB AND URLLC APPLICATIONS WITH HIGH RELIABILITY REQUIREMENTS**

(57) A system and method for optimizing data transmission rates in telecom systems requiring very high reliability that accounts for retransmissions of data and corresponding HARQ feedback and using HARQ retransmission to: avoid packets being delayed beyond their allowed PDB for associated radio bearers, avoid increasing failure rate, and avoids increasing latency due to the stop and wait protocol employed for HARQ retransmission, by transmitting NACK via RLC protocol avoiding multiple retransmissions on receiving a HARQ NACK for a selected HARQ process.

FIG. 1

EP 4 622 153 A1

**Description**

BACKGROUND

1. Field of the Disclosure

The present disclosure is related to controlling transmissions rates in telecom systems. More particularly, the present disclosure is related to processes for optimizing data transmission rates in telecom systems requiring very high reliability.

2. Description of Related Art

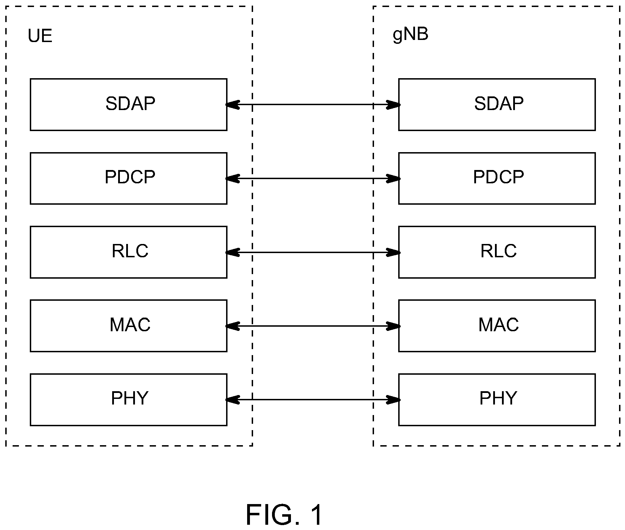

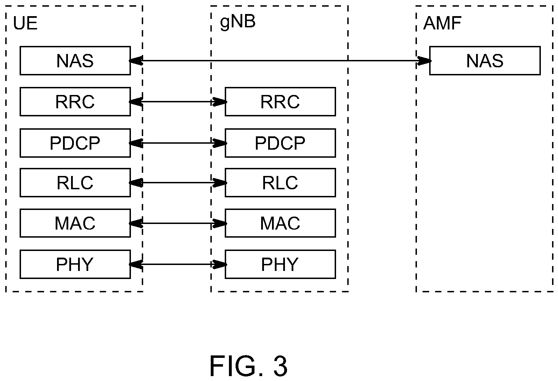

5G New Radio (NR) user and control plane functions with monolithic gNodeB (gNB) are shown in FIGS. 1-3. For the User Plane (UP), physical (PHY), Medium Access Control (MAC), Radio Link Control (RLC), Packet Data Convergence Protocol (PDCP) and Service Data Adaptation Protocol (SDAP) sublayers are terminated in the gNB on the network side. For the Control Plane (CP), Radio Resource Control (RRC), PDCP, RLC, MAC and PHY sublayers are terminated in the gNB on the network side and Non-Access Stratum (NAS) is terminated in the Access Mobility Function (AMF) on the network side.

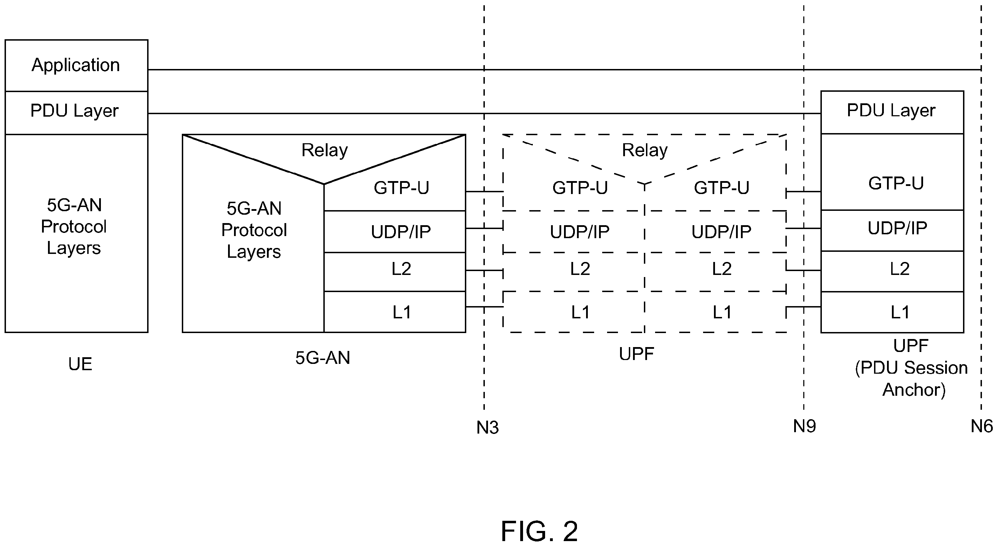

A Protocol Data Unit (PDU) layer corresponds to the PDU carried between the User Equipment (UE) and the Data Network (DN) over the PDU session. PDU session could correspond to IPv4 or IPv6 or both types of Internet Protocol (IP) packets when PDU session is of type Internet Protocol version 4 (IPv4), Internet Protocol version 6 (IPv6) or IPv4v6 respectively. General Packet Radio Service (GPRS) Tunneling Protocol User Plane (GTP-U) supports tunnelling User Plane (UP) data over N3 and N9 in FIG. 2. It provides encapsulation of end user PDUs for N3 and N9 interfaces above.

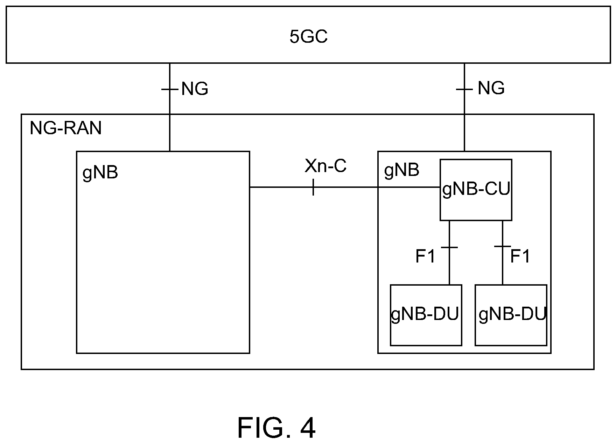

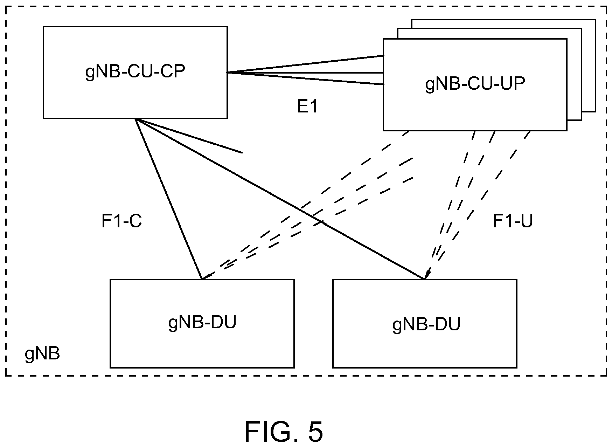

Next Generation-Radio Access Network (NG-RAN) architecture from 3GPP is shown in FIGS. 4-5. F1 is the interface between gNB - Centralized Unit (gNB-CU) and gNB - Distributed Unit (gNB-DU), NG is the interface between gNB-CU (or gNB) and 5G Core (5GC), E1 is the interface between CU-Control Plane (CU-CP) and CU-User Plane (CU-UP), and Xn is the interface between gNBs.

A gNB may comprise a gNB-CU-CP, multiple gNB-CU-UPs and multiple gNB-DUs. The gNB-CU-CP is connected to the gNB-DU through the F1-C interface and to the gNB-CU-UP through the E1 interface. The gNB-CU-UP is connected to the gNB-DU through the F1-U interface and to the gNB-CU-CP through the E1 interface. One gNB-DU is connected to only one gNB-CU-CP and one gNB-CU-UP is connected to only one gNB-CU-CP.

Overview of Layer 2. The Layer 2 (L2) of 5G NR is split into the following sublayers:

1) Medium Access Control (MAC): The MAC sublayer offers Logical Channels (LCs) to the sublayer. This layer runs a MAC scheduler to schedule radio resources across different LCs (and their associated radio bearers);

2) Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts Automatic Repeat Request (ARQ) protocol for RLC-AM mode;

3) Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane; and

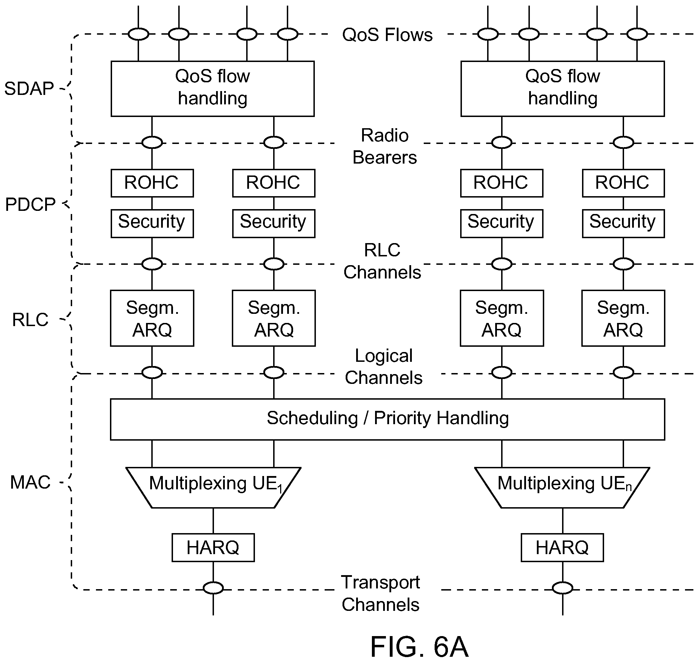

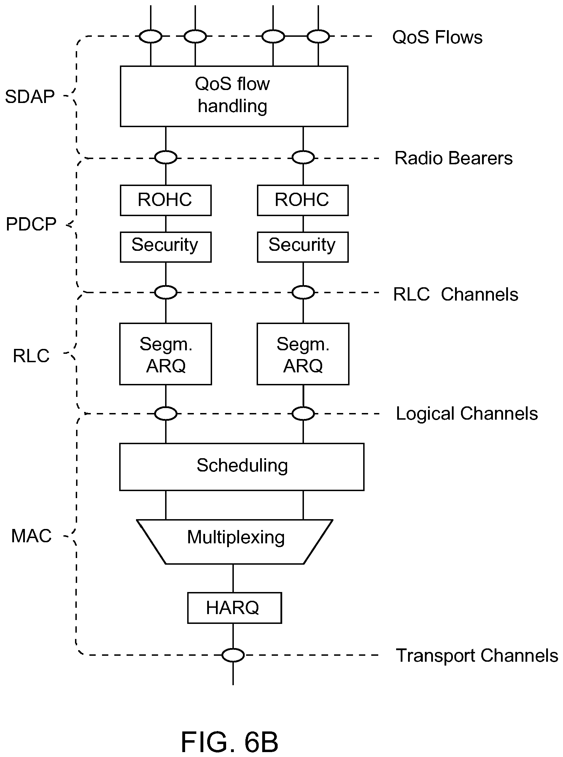

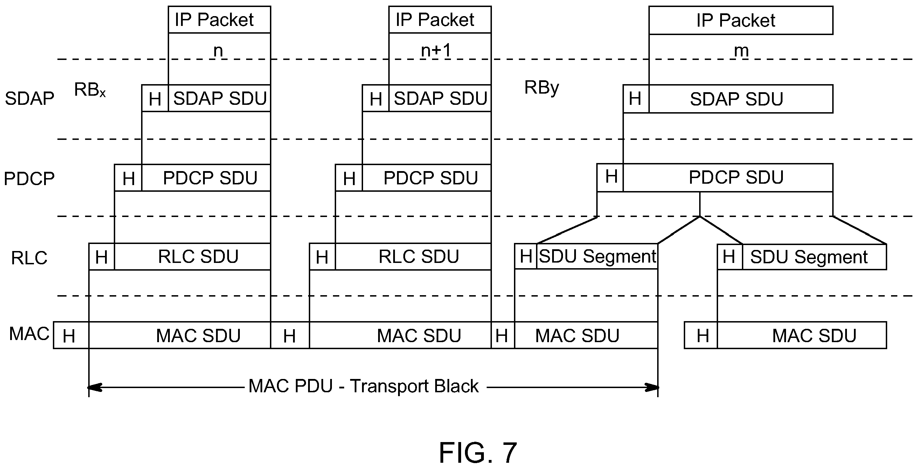

4) Service Data Adaptation Protocol (SDAP): The SDAP offers Quality of Service (QoS) Flows to the 5GC (5G Core). This sublayer provides mapping between a QoS flow and a DRB. It marks QoS Flow Id in DL (downlink) as well as UL (uplink packets). DL and UL L2 structures are illustrated in FIGS. 6A & 6B, while FIG. 7 provides an L2 Data Flow example, where H denotes headers or sub-headers.

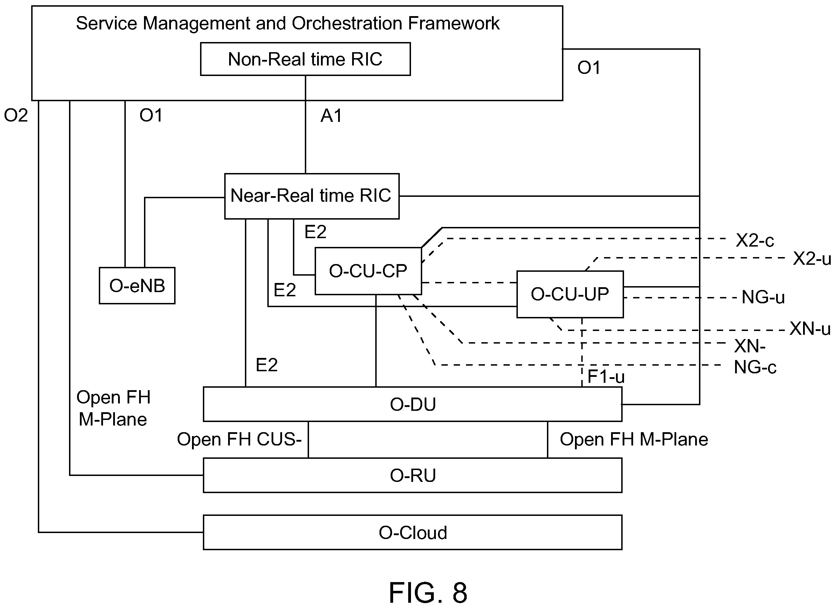

Overview of the O-RAN Architecture. O-RAN is based on disaggregated components and connected through open and standardized interfaces is based on 3GPP NG-RAN. An overview of O-RAN with disaggregated RAN (CU, DU, and RU), near-real-time RAN Intelligent Controller (RIC) and non-real-time RIC is shown in FIG. 8. A Distributed Unit (DU) and a Centralized Unit (CU) are typically implemented using Commercial off-the-shelf (COTS) hardware.

The CU and the DU are connected using the F1 interface (with F1-C for control plane and F1-U for user plane traffic) over the midhaul (MH) path. One DU could host multiple cells (e.g., one DU could host 24 cells) and each cell may support many users. For example, one cell may support 600 RRC Connected users and out of these 600, there may be 200 Active users (i.e., users that have data to send at a given point of time).

A cell site could comprise multiple sectors and each sector may support multiple cells. For example, one site could comprise three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (correspnding to 100,000 UEs) may be served by five CU-UP instances (and one CU-CP instance).

The DU could be located in a private data center or it could be located at a cell-site too. The CU could be located in a private data center or even hosted on a public cloud system. The DU and the CU could also be remoted located from each other. The CU could communicate with the 5G core system, which could also be hosted in the same public cloud system (or could be hosted by a different cloud provider). A Radio Unit (RU) is located at a cell-site and communicates with the DU via a fronthaul (FH) interface.

The E2 nodes (CU and DU) are connected to the near-real-time RIC using the E2 interface. During the E2 setup procedures, the E2 node advertises the metrics it can expose. An xApp in the near-RT RIC can send a subscription message specifying key performance metrics.

The E2 interface is used to send data (e.g., user / cell KPMs) from the RAN to the near-RT-RIC, and deploy control actions and policies to the RAN from the near-real-time RIC. The application or service at the near-real-time RIC that deploys the control actions and policies to the RAN are called xApps. The near-real-time RIC is connected to the non-real-time RIC using the A1 interface.

PDU Sessions, DRBs, QoS Flows. In 5G networks, PDU connectivity service is a service that provides exchange of PDUs between a UE and a data network identified by a Data Network Name (DNN). The PDU Connecitivity service is supported via PDU sessions that are established upon reqauest from the UE. This DNN defines the interface to a specific external data network. One or more QoS flows can be supported in a PDU session. All the packets belonging to a specific QoS flow have the same 5G QoS Identifier (5QI). A PDU session comprises the following: a Data Radio Bearer (DRB), which is between the UE and the CU in the RAN; and a NG-U GTP tunnel, which is between the CU and the User Plane Function (UPF) in the core network.

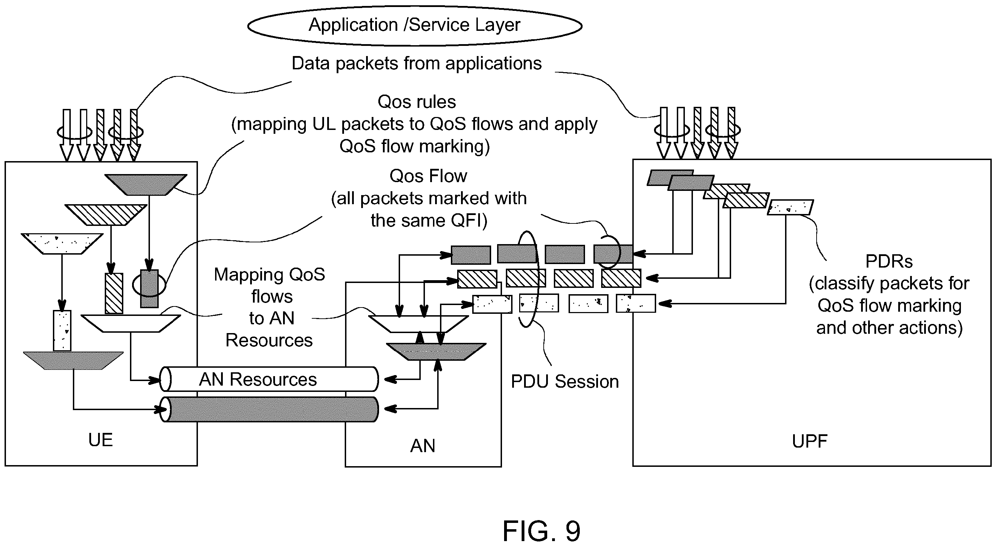

Referring to FIG. 9, note the following for the 3GPP's 5G network architecture:

1) The transport connection between the base station (i.e., CU-UP) and UPF uses a single GTP-U tunnel per PDU session. The PDU session is identified using GTP-U TEID (Tunnel Endpoint Identifier);

2) The transport connection between DU and CU-UP uses a single GTP-U tunnel per DRB;

3) Service Data Adaptation Protocol (SDAP):

   a) The SDAP Layer receives downlink data from the UPF across the NG-U interface;

   b) It maps one or more QoS Flow(s) onto a specific DRB; and

   c) The SDAP header is present between the UE and the CU (when reflective QoS is enabled), and includes a field to identify the QoS flow within a specific PDU session; and

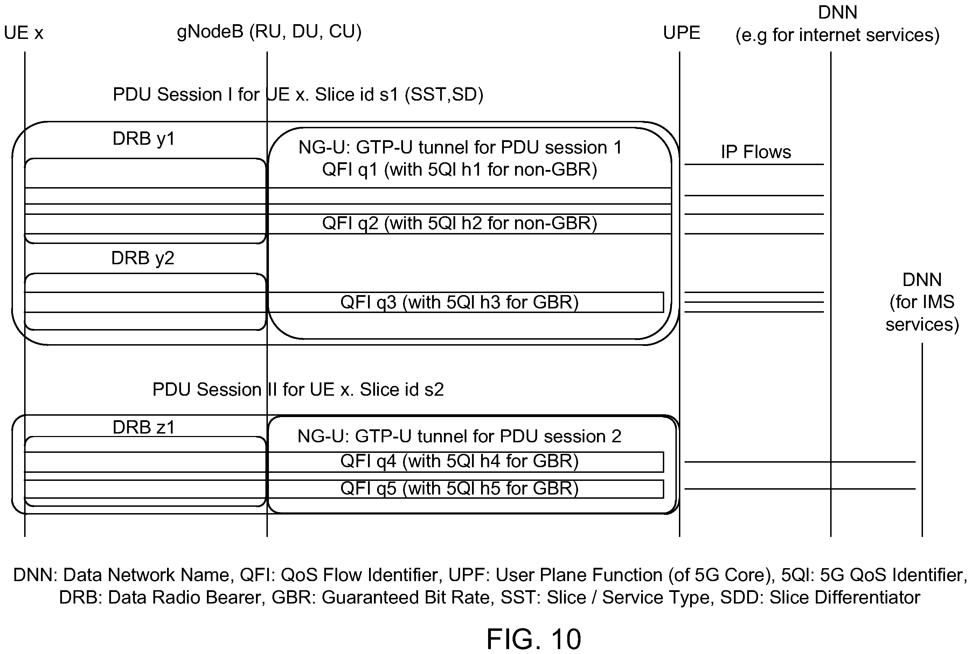

4) User plane protocol includes a field to identify the QoS flow and is present between CU and UPF (in the core network). An example is shown in FIG. 10.

Standardized 5QI to QoS characteristics mapping. The one-to-one mapping of standardized 5QI values to 5G QoS characteristics is specified by Table 1.

**Table 1**

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| **74** | | 56 | 500 ms (NOTE 11, NOTE 15) | $10^{-8}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g. www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) interactive Gaming |

The first column represents the 5QI value. The second column is to differentiate the resource type as: Non-Guaranteed Bit Rate (GBR), GBR, Delay-critical GBR. Column 3 represents a priority level $Priority_{5QI}$, where the lower the value the higher the priority of the corresponding QoS flow. Column 4 represents the Packet Delay Budget (PDB), which defines an upper bound for the time that a packet may be delayed between the UE and the N6 termination point at the UPF.

Column 5 represents the pack error rate (PER). Column 6 represents the maximimum data burst volume for delay-critical GBR types and Coulmn 7 avaraging window for GBR delay critical GBR types. For example, 5QI value 1 is of resource tye GBR with the default priority value of 20, corresponding PDB, PER averaging widnow of 100ms, 0.01, 2000ms respectively. Conversational voice falls under this catogery. Similarly 5QI value 7 is of resource tye Non-GBR with the default priority value of 70, PDB of 100ms and PER of 0.001. Voice, video (live streaming), interactive gaming falls under this catogery.

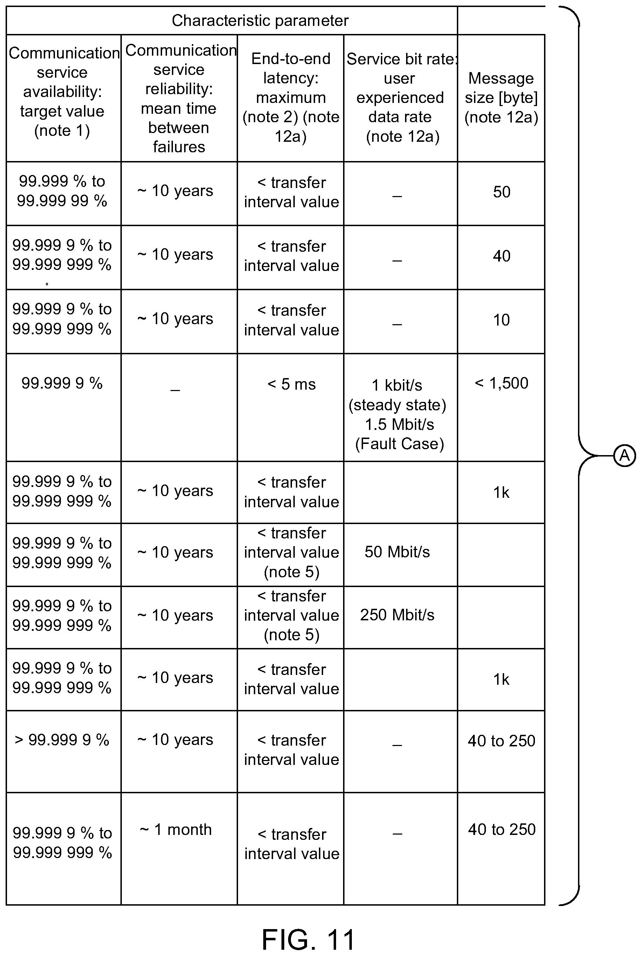

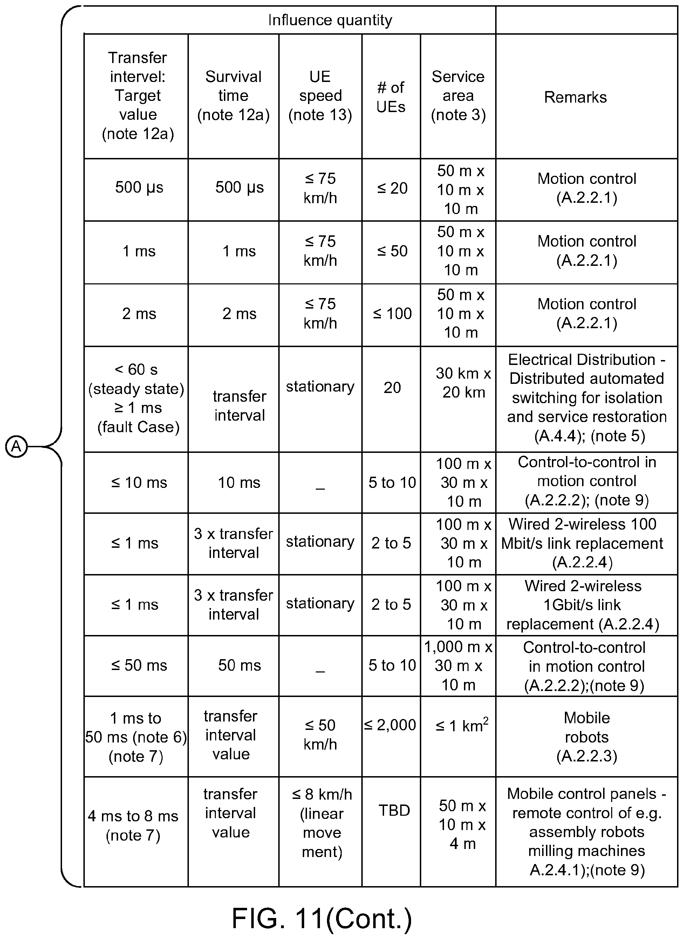

Ultra-Reliable Low Latency Communication (URLLC) use cases have even more stringent requirements. These include requirements of very low latency, high reliability, very high availability, very low latency, consistent throughput, and very low mobility interruption time. Some of the URLLC use cases are listed in FIG. 11 (reference 3GPP TS 22.104, https://portal.3gpp.org/desktopmodules/Specifications/SpecificationDetails.aspx?specificationId =3528).

HARQ Process. Previous communication systems used Automatic Repeat Request (ARQ) protocol, where a packet that is not correctly received at the receiver is discarded at the receiver and a negative acknowledgment (NACK) is sent to the sender. If NACK is received or a timeout occurs, the sender resends the packet stored in its buffer to the receiver again. If the sender receives a packet correctly, it is sent to higher layers, and an acknowledgement (ACK) is sent to the sender (and sender removes the packet from its buffer). ARQ may use a stop and wait protocol, where the next packet transmission will wait till ACK or NACK received for the previous packet. To speed up this process, the communication system may use Go back N ARQ process where up to N packets can be transmitted before the sender stops and waits for ACK or NACK from the receiver.

Long Term Evolution (LTE) and New Radio (NR) systems use Hybrid Automatic Repeat Request (HARQ) which transmits and retransmits transport blocks (TBs). HARQ uses ARQ and Forward Error Correction (FEC) codes. The decoders used for these FEC codes are capable of soft combining. In this case the FEC encoder (or sender) converts the data packet into code blocks, containing information bits and some redundant information called parity bits. The receiver tries to decode the information bits with the help of redundant information present in the code block.

If a packet fails to decode due to errors, this decoder keeps the received packet (or code block) in its buffer and sends NACK to the sender. On receiving NACK, the sender retransmits a new code block with additional redundancy information (i.e., parity bits) generated by the FEC encoder to the receiver. The receiver soft combines the received code blocks with different redundancy information for decoding the correct packet. If the packet is decoded successfully, it sends the data to a higher layer for further processing and sends ACK to sender. If the packet still can't be decoded correctly, additional retransmissions are attempted up to a configured maximum number of attempts. Systems employing HARQ often use a parallel N stop and wait protocol to improve throughput.

The advantage of HARQ over conventional ARQ is that the system can rapidly correct any error in reception, at the upper PHY/MAC, without involving higher layers. This reduces the delay to a few slots (e.g. 4 to 14 slots) in the case of any packet failure and this delay is much less compared to the case where packets are retransmitted at RLC layer as part of Layer 2 retransmissions. Multiple parallel HARQ processes are used to increase throughput and each of these processes operate in stop and wait mode.

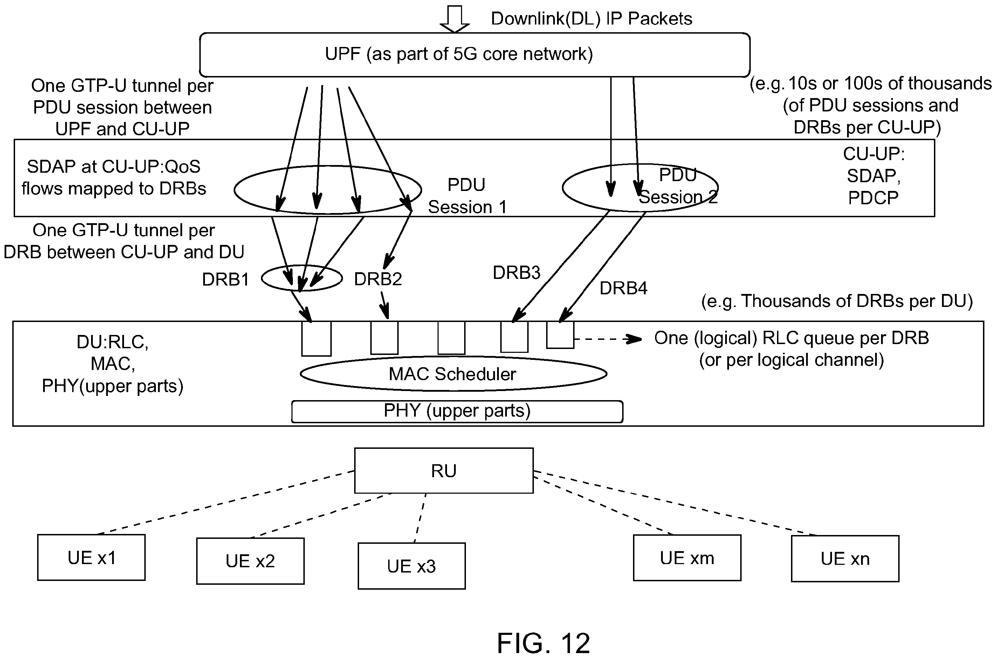

Link Adaptation (LA). In cellular systems such as NR and LTE, base station (BS) uses a link adaptation (LA) method to vary the transmission rate based on UE Channel State Information (CSI) feedback. This is done to cater to varying channel conditions (between UE and BS) while keeping the block error rate (BLER) below a predefined threshold. Note that LA is part of MAC scheduler in DU in FIG. 12.

In most communication systems, Signal to Interference and Noise (SINR) of a link determines the data rate supported by the link. Here the SINR is the ratio of signal power to sum of all interference and noise power. Generally higher SINR means higher data rate. Usually DL (downlink) SINR is estimated from the UE CSI feedback, and UL (uplink) SINR is estimated from the PHR (Power Headroom Report) reported by UE, received power strength, noise and interference at the base station receiver.

Modulation and coding scheme (MCS) is a set of predefined data rates for a communication system. The sender or DU scheduler determines the specific MCS value (data rate) to be used on communication link using link SINR, target Block Error Rate (BLER) etc. MCS used in 5G NR comprises 32 different data rates. The exact data rate (MCS value) used in the link is indicated to UE through downlink control information (DCI) via control channel for each grant.

The first existing LA method is now discussed. As discussed earlier, a base station uses CSI feedback from UE for (downlink) link adaptation. But the feedback from UE in many cases may not accurately indicate the optimal rate supported by the link and may not reflect the current situation correctly if CSI reporting interval is high (e.g. sending CSI every 20 or 40 or 80ms instead of sending CSI every 1 or 2ms). In uplink (UL), usually the link adaptation works based on Power Headroom Report (PHR) reported by UE or by estimating channel from a Sounding Reference Signal (SRS) transmitted from UE and with the estimate of Noise and interference.

Further to improve throughput, the base station (BS) also employs an outer loop link adaptation (OLLA) method based on HARQ feedback, which allows for rapid link adaptation resulting in better Modulation and coding scheme (MCS) allocated to the link and thus better throughput. In some of the existing methods, whenever a HARQ feedback is received, the OLLA method increases the SINR by a step-up factor (denoted as OLLA StepUp below) if the feedback is ACK and reduces the SINR by a step-down factor (denoted as OLLA StepDown below) if the feedback is NACK. For every HARQ feedback received,

While ACK is reported,

$$SINR_{OLLA} = SINR_{OLLA} + OLLA\ StepUp$$

While NACK is reported,

$$SINR_{OLLA} = SINR_{OLLA} - OLLA\ StepDown$$

LA will use this OLLA SINR (denoted as $SINR_{OLLA}$ above) to determine the MCS for all new transmissions.

One limitation of outer loop link adaptation is that the HARQ feedback loop has delays, referred to as scheduler round trip delay or scheduler round trip time (scheduler RTT). For example, in downlink (DL) the delays are due to the following factors:

1) Scheduler to transmission delay;

2) Over the air propagation delay for data;

3) Receiver processing delay at UE;

4) HARQ feedback delay;

5) Over the air propagation delay for HARQ feedback; and

6) Receiver processing delay at BS.

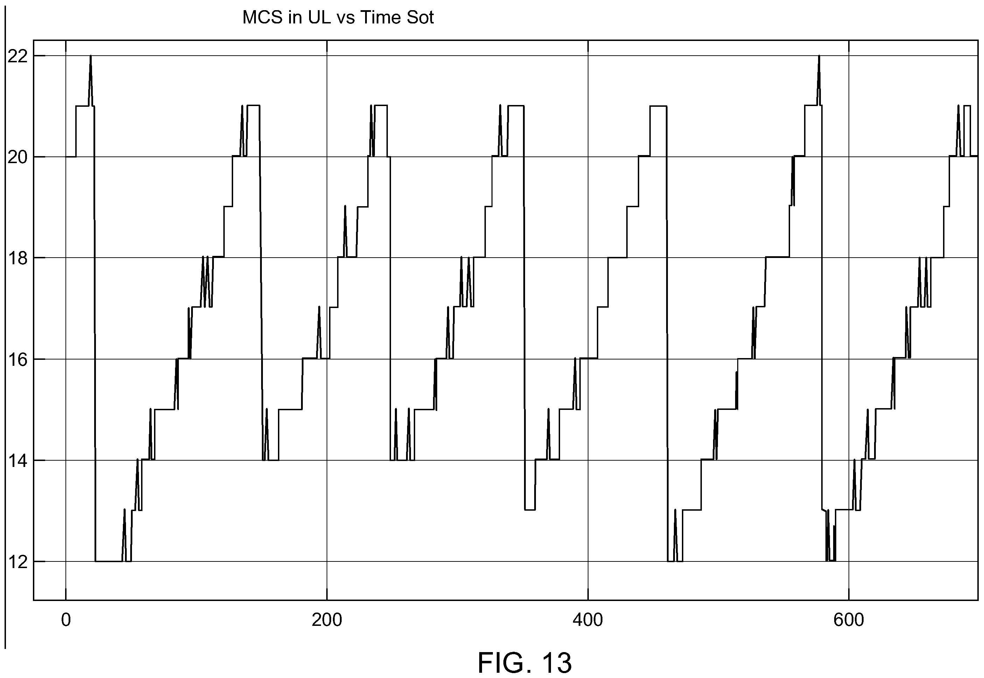

The total round-trip delays can be between 4 slots to 14 slots in some systems. NR and LTE base stations overcome these delays with the help of N parallel HARQ processes. For example, LTE allows up to 16 HARQ process. This means if an aggressive MCS is chosen by the OLLA method, it will be used by multiple HARQ process before the HARQ feedback (for transmission with that MCS) is received. In case this MCS results in NACK feedback, there can be up to N such NACK feedback (and result in a train of NACKs). If LA method processes all these feedback packets, SINR can be reduced by N step-down factors, and this can result in aggressive reduction in MCS and reduce the throughput. One example is shown in FIG. 13. One solution is reducing the OLLA step-down factor, but this results in the system not being able to react to sudden channel variations.

A second LA method, which can be characterized as a stop and wait OLLA method with SINR updates based on a selected HARQ process. At a given time, this method (at a sender node) selects one HARQ process at random (from multiple parallel HARQ processes scheduled at that node) and monitors feedback for this process from the receiver. Based on the feedback received for this selected HARQ process, this method adjusts the SINR for all the N processes (scheduled at that time).

It works as follows, based on the feedback received for the specific (selected) HARQ process, update SINR for all the N processes as follows:

While ACK is reported for the selected HARQ process, update SINR for all the N processes as follows:

$$SINR_{OLLA} = SINR_{OLLA} + OLLA\ StepUp$$

Otherwise (i.e., if NACK is reported from the selected HARQ process), update SINR for all the N processes as follows:

$$SINR_{OLLA} = SINR_{OLLA} - OLLA\ StepDown$$

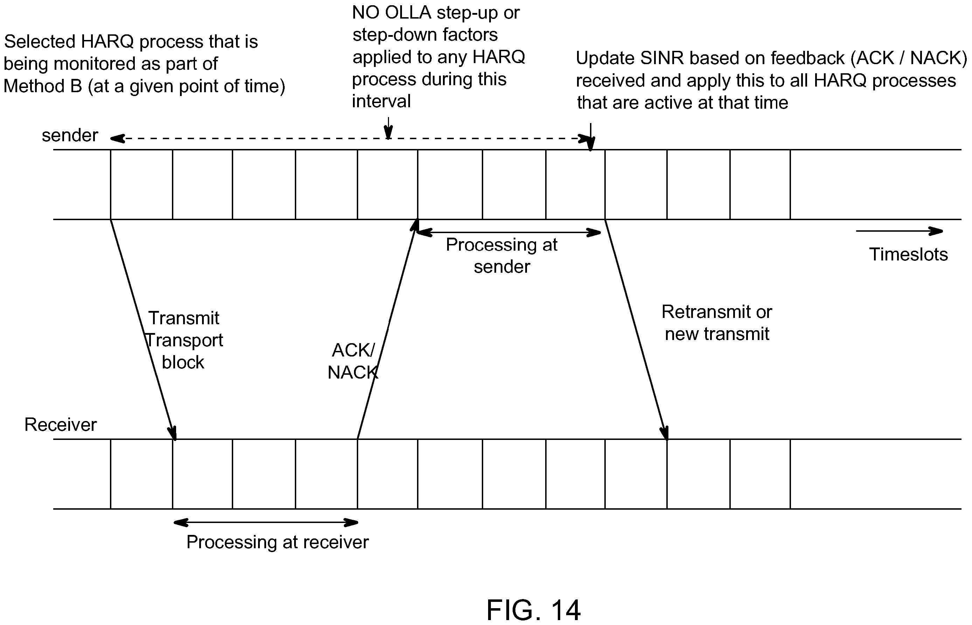

LA will use the above computed SINR (denoted as $SINR_{OLLA}$ above) to determine the MCS for all new transmissions. A high-level summary of this method is illustrated in FIG. 14.

Select and start monitoring a new HARQ process after SINR updates above and when new data is scheduled to be transmitted (from sender to receiver). The advantage is that a higher OLLA step-up or step-down factor can be used, which ensures MCS adapts faster with channel variations. With this OLLA stop and wait method, N transmissions are over the air with the same MCS while OLLA is observing one specific HARQ process and if the MCS selected by the OLLA method is higher than what can be supported by the link, UE can fail to decode several packets. In this case, up to N NACKs are received by the BS in consecutive slots, but MCS reduction is contained compared to the previous method (and in that sense, it improves over the first existing LA method).

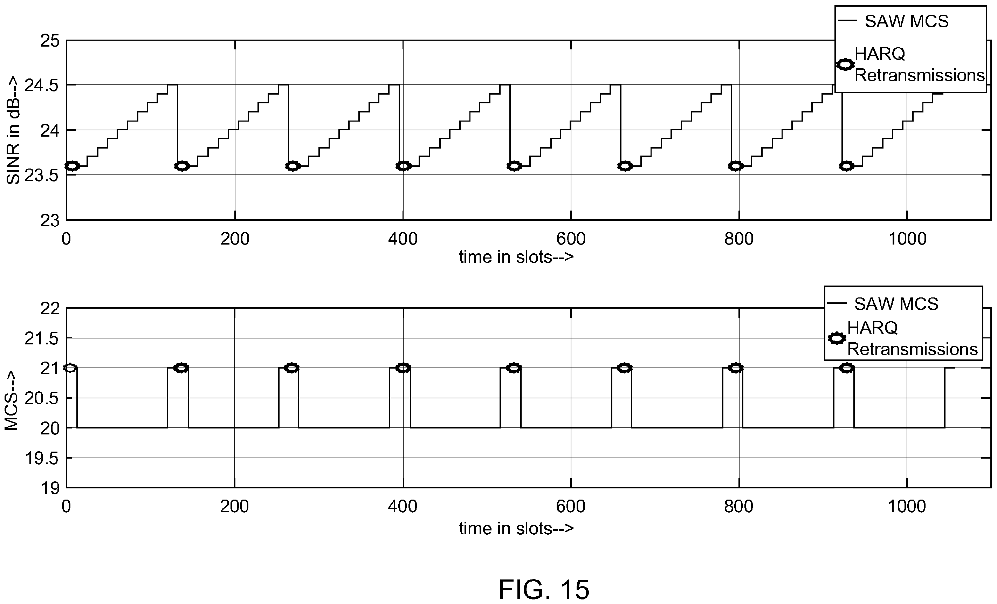

An example is shown in FIG. 15. All these (incorrectly decoded) transport blocks need to be retransmitted requiring another N (or higher number of) slots. These additional retransmissions unfortunately reduce the throughput and increase the delay.

Both the first and second LA methods can improve the BS to meet an initial Block Error Rate (BLER) target required by properly choosing suitable values for OLLA step up and step-down factors, however performance can be greatly improved to increase throughput (and reduce delay).

Also, in general the OLLA step-up factor is less than OLLA step down factor. For example, OLLA step up factor of 0.1 dB and OLLA step down factor is 0.9 dB can be used for a target BLER of 10%.

OLLA methods consider only the first transmission of data and its first HARQ feedback while updating SINR. Retransmissions of the data and corresponding HARQ feedback of are not considered for OLLA updates.

PDCP Duplication (for URLLC and eMBB scenarios with high reliability requirements). PDCP duplication is used by wireless systems to meet the reliability and latency requirements. In this case, packets are duplicated at PDCP (at CU-UP) layer and each of these duplicated packets are transmitted to UE through different paths (and usually via different radio links). When duplication is configured for a radio bearer by RRC, at least one secondary RLC entity is added to the radio bearer to handle the duplicated PDCP PDUs, where the logical channel corresponding to the primary RLC entity is referred to as the primary logical channel (Primary LCH), and the logical channel corresponding to the secondary RLC entity(ies), the secondary logical channel(s). All RLC entities have the same RLC mode.

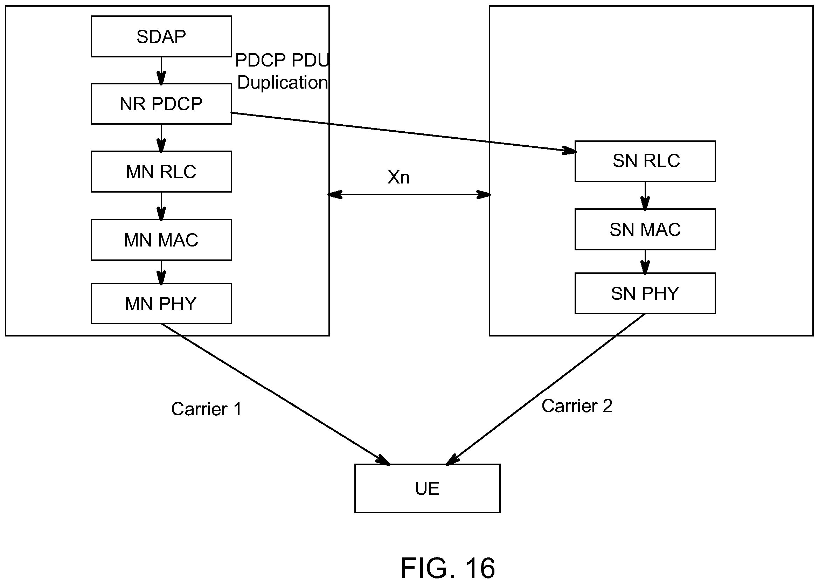

With PDCP Duplication (as shown in FIG. 16), the PDCP entity at the Master Node (MN) replicates PDCP PDUs and each such PDCP PDU is forwarded to the Secondary Node (SN) via Xn interface. These transmitting nodes (i.e. MN and SN) send these packets towards the UE. Each such duplicated PDCP PDU (sent via MN and SN) has the same sequence number. These packets go through separate RLC, MAC and Physical layer processing as they get transmitted over different radio links to the UE. The receiver entity (i.e. UE in the case of DL PDCP Duplication) detects and discards duplicate packets.

For each of these different radio links (or different cells), independent LA methods choose the MCS to be used while transmitting packets to UE. To meet the stringent requirement of reliability and latency, the link adaptation methods are designed conservatively for these scenarios. The link adaptation method may use very conservative CSI feedback and low code rate MCS tables for URLLC, such as $10^{-6}$ BLER and low code rate MCS tables instead of $10^{-1}$ BLER and high code rate MCS tables which are used for normal enhanced mobile broad band (eMBB) communication systems.

In many cases, retransmissions cause packets to be delayed beyond their allowed packet delay budget (PDB) for the associated data radio bearers. Existing OLLA methods, including the first and second LA methods, where SINR estimation (for LA) is based on ACK/NACK, feedback cannot be employed in this kind of system as these methods increase the failure rate and increase the latency due to the stop and wait protocol employed for HARQ retransmission.

Accordingly, there is a need for a telecom system that overcomes, alleviates, and/or mitigates one or more of the aforementioned and other deleterious effects of prior art data transmission control systems.

SUMMARY

Accordingly, what is desired is a system and method for optimizing data transmission rates in telecom systems requiring very high reliability accounting for retransmissions of data and corresponding HARQ feedback.

It is also desired to provide a system and method for optimizing data transmission rates in telecom systems requiring very high reliability using HARQ retransmission that avoids packets being delayed beyond their allowed PDB for associated radio bearers.

It is further desired to provide a system and method for optimizing data transmission rates in telecom systems requiring very high reliability using HARQ retransmission that does not increase the failure rate.

It is still further desired to provide a system and method for optimizing data transmission rates in telecom systems requiring very high reliability using HARQ retransmission that does not increase the latency due to the stop and wait protocol employed for HARQ retransmission.

In one configuration, a system and method are provided that proposes an improvement over the second LA method. The second LA method applies OLLA step-up factor to only one HARQ process till it receives feedback from that process and applies to all the processes once the positive feedback (i.e. ACK) is received. Specifically, in the "stop and wait OLLA" method, the SINR estimated for the link is increased by OLLA step-up factor whenever a HARQ acknowledgement (ACK) is received on the selected HARQ process. All the processes transmitting subsequently will be scheduled with the increased SINR value and this results in higher MCS rate, while OLLA monitors only the first (or one) HARQ process after the OLLA update for feedback. In this scenario, it is possible that this higher MCS is not sustainable for the link and all packets with this higher MCS already scheduled (e.g. up to N packets if Scheduler round trip time is equal to N slots) will fail to be decoded at the receiver and the sending node will receive NACKs for all these packets subsequently. All these packets need to be retransmitted which results in loss of overall throughput until the sender node reduces the SINR and MCS for the link (based on NACK feedback).

Method I-A. This method is described for downlink; however, it should be noted it is also applicable for uplink. For downlink, a base station (i.e., sender) has one HARQ entity per UE (i.e., receiver) and each such HARQ entity supports multiple (parallel) HARQ processes (e.g., max N for a given UE). At any given point of time, a HARQ process may be either transmitting a new Transport Block (TB) or could be retransmitting a TB which was previously transmitted but for which ACK was not received from the UE or it may be waiting. There is a maximum limit up to which retransmissions of a TB can be attempted with the HARQ protocol. If UE is able decode a TB correctly before this maximum number of HARQ attempts between BS and UE, UE sends ACK as feedback to BS. Otherwise, it keeps sending NACK as feedback. If maximum number of HARQ attempts are reached for a TB and if UE is still not able to decode TB correctly, the BS sends it to UE via RLC protocol. Method I-A avoids multiple retransmissions on receiving a NACK for the selected HARQ process.

Method I-A. This method increases the SINR by OLLA step-up factor for a single HARQ process selected randomly from the N parallel HARQ processes. Note that this method considers those HARQ processes that are ready to begin transmitting a new TB and are not retransmitting TBs, while selecting this random HARQ process to monitor.

Method I-B. This method allows the operator to apply various types of policies. Downlink is again considered in describing this method though it is applicable for uplink too. This method is used to improve accuracy of method I-A for link adaptation.

In a configuration of this method, a maximum allowed HARQ processes at the sender (i.e., BS) is N for a receiver (i.e. UE). This method I-B first increases the SINR by OLLA step-up factor for 'r' HARQ processes selected randomly from the N parallel HARQ processes. Here 'r' is equal to or greater than 1 and less than or equal to N. Note that this method considers those 'r' HARQ processes which are ready to begin transmitting a new TB and are not retransmitting TBs, while selecting this random HARQ process to monitor.

An additional policy is provided where SINR is increased by OLLA step-up factor for these randomly chosen 'r' HARQ processes only if the last feedback received from that UE was ACK before increasing OLLA SINR for any of these randomly chosen HARQ processes. Note this previous feedback from the UE could have been for any other HARQ process too but it is the latest feedback which is considered in this policy. Here, only those feedback messages are considered where feedback received is ACK for the first transmission attempt of a TB.

As an alternate policy this OLLA SINR is increased only if step-up factor (for OLLA SINR updates) is much smaller than step-down factor.

To select 'r' HARQ processes out of 'N' HARQ processes, this method provides some other options such as choosing process which see different SINR conditions. As an example, a sender receives ACK for r1 of r HARQ processes from the receiver. Here, 'r1' is less than or equal to 'r'. If 'r1' divided by 'r' is equal to or above a threshold, Method I-B updates OLLA SINR and increases OLLA SINR for all the other 'N minus r' HARQ processes and uses this to determine MCS for all the HARQ processes for that UE.

Otherwise, method I-B reduces OLLA SINR for these 'r' processes and it either reduces OLLA SINR for other 'N minus r' processes or it doesn't change OLLA SINR for other 'N minus r' HARQ processes. The above procedure is repeated by selecting r HARQ processes for monitoring and updating the SINR of the processes as described above.

Method I-C. This method is like method I-B but applies different OLLA SINR step-up factors to the 'r' processes that are chosen to be monitored. This is illustrated with an example using two levels of step-up factors. In this example, it could use OLLA step-up factor of sf1 (e.g., 0.1 dB) for s1 HARQ processes and sf2 (e.g., 0.2 dB) for s2 of these HARQ processes (with s1 + s2 = r).

The sender receives ACK for r1 of these r HARQ processes from the receiver. This method facilitates applying various policies with different objectives, which helps to meet high reliability requirements but keeps throughput also relatively high at the same time.

Method I-D. This method reduces delays due to retransmission. LA can choose to proactively retransmit the data for the selected HARQ process in subsequent slots without waiting for HARQ feedback. In the case of mini slot transmission, this retransmission can be in the same slot. This retransmission decision can be based on the confidence level the link adaptation method has regarding the selected MCS and delay requirement of the data packet.

Method I-E (near-RT-RIC based OLLA Method and parameter selection). In this method, various parameters related to method I-C are communicated from DU to near-RT-RIC using the E2 interface. For example, for method I-D, the following parameters are communicated from DU to near-RT-RIC (for DL link adaptation) for each cell, each UE and each DRB: 1) CSI being reported by UEs (in a given cell); 2) A number of randomly chosen HARQ process by each UE (i.e., 'r' as denoted in method I-C); 3) A group of chosen HARQ processes from these 'r' process (i.e., 's1' and 's2' from method I-C); 4) Different OLLA SINR step-up factors used for these HARQ processes (i.e., step-factor 'sf1' and 'sf2' from method I-C); 5) a value of OLLA SINR step-down factors; 6) BLER being overserved for each DRB (for each UE); 7) Initial BLER target for each DRB; 8) Throughput observed for each DRB (e.g., as measured at DU); 8) RLC queue delay for each DRB at DU; 9) QoS indicator (such as 5QI) of the DRB; and 10) Related parameters as described in Method I-C.

Method II. For applications with higher reliability requirements (such as 'URLLC' or 'eMBB applications with high reliability requirements'), PDCP packets can be duplicated for a DRB for higher reliability. These duplicated packets are typically sent through multiple radio links. As these links include independent radio channels, chances of duplicate packets failing is minimal provided very conservative MCS is used while transmitting packets over these links. It improves reliability but results in wastage of network resources. This method meets reliability constraints but reduces the wastage of network resources (e.g. PRBs over the air-interface) and thus improves the capacity of each cell.

As part of this method, near-RT-RIC subscribes to link adaptation and other performance related parameters from MN as well as SN nodes. For each of these MN and SN nodes, various parameters as discussed in connection with method I-E are used. This method also includes additional parameters to indicate whether a DRB is carrying duplicated PDCP PDUs and identity of SN node for each such DRB through which replicated PDCP PDUs of a DRB are being sent.

The near-RT-RIC analyzes various parameters it receives from MN and SN nodes for each DRB and each UE for a given cell. For DRBs where PDCP PDUs are replicated and sent via a given pair of MN and SN nodes (and the corresponding cells), near-RT-RIC helps apply to various policies that can improve network resource utilization without violating reliability constraints.

In one configuration, a method for optimizing data transmission rates in telecom systems requiring high reliability is provided, the method comprising the steps of: providing a transmitter having one Hybrid Automatic Repeat Request (HARQ) entity per receiver, and supporting N number of multiple parallel HARQ processes with each HARQ entity, wherein there is a maximum number of retransmissions of a Transport Block (TB) that can be attempted with HARQ protocol. The method further comprises the steps of: decoding a TB with the receiver, transmitting a HARQ acknowledgement (ACK) from the receiver to the transmitter when the receiver decodes the TB correctly before the maximum number of HARQ retransmissions is reached, and transmitting a HARQ negative acknowledgement (NACK) from the receiver to the transmitter when the receiver cannot decode the TB correctly before the maximum number of HARQ retransmissions is reached, the NACK transmitted via Radio Link Control (RLC) protocol avoiding multiple retransmissions on receiving a HARQ NACK for the selected HARQ process.

The above-described and other features and advantages of the present disclosure will be appreciated and understood by those skilled in the art from the following detailed description, drawings, and appended claims.

DESCRIPTION OF THE DRAWINGS

FIG. 1 is an illustration of a User Plane Stack.

FIG. 2 is an illustration of User plane protocol stacks for a PDU session.

FIG. 3 is an illustration of a Control Plane Stack.

FIG. 4 is an illustration of NG-RAN Architecture.

FIG. 5 is an illustration of Separation of CU-CP and CU-UP.

FIG. 6A is an illustration of DL Layer 2 Structure.

FIG. 6B is an illustration of UL Layer 2 Structure.

FIG. 7 is an illustration of an L2 Data Flow Example.

FIG. 8 is an illustration of O-RAN Architecture.

FIG. 9 is an illustration of a PDU Session comprising multiple DRBs, where each DRB may comprise multiple QoS flows.

FIG. 10 is an illustration of PDU Sessions, QFIs, DRBs.

FIG. 11 is a table of URLLC use cases.

FIG. 12 is an illustration of Link Adaptation that is part of DU / MAC Scheduler.

FIG. 13 is a chart showing MCS variation due to train of NACKs across time.

FIG. 14 an illustration of the Stop and Wait OLLA method.

FIG. 15 illustrates the Stop and Wait OLLA method where SINR and MCS are applied to all HARQ process.

FIG. 16 illustrates PDCP Duplication with NR-NR Dual Connectivity Architecture.

FIG. 17 is a process flow diagram according to one configuration of the invention.

FIG. 18 illustrates SINR/MCS variation over time according to FIG. 17.

FIG. 19 is a comparison of SINR between the method of FIG. 17 and the Stop and Wait OLLA method.

FIG. 20 is a process flow diagram according to a variation of FIG. 17.

FIG. 21 is a process flow diagram according to a variation of FIG. 17.

FIG. 22 is a block diagram according to a variation of FIG. 17.

FIG. 23 is a process flow diagram according to FIG. 22.

DETAILED DESCRIPTION

<u>Method I-A.</u> For downlink, a base station (i.e., sender) has one HARQ entity per UE (i.e., receiver) and each such HARQ entity supports multiple (parallel) HARQ processes (e.g., max N for a given UE). At any given point of time, a HARQ process may be either transmitting a new Transport Block (TB) or may be retransmitting a TB which was previously transmitted but for which ACK was not received from the UE or it may be waiting (e.g., it may be waiting to get feedback from the UE or as the base station may be processing feedback received from the UE or it may not have been activated due to lack of downlink data at the base station). There is a maximum limit up to which retransmissions of a TB can be attempted with the HARQ protocol. This limit could be 3 for each HARQ process corresponding to a UE (supporting one or more DRBs. If UE is able decode a TB correctly before this maximum number of HARQ attempts between BS and UE, UE sends ACK as feedback to BS. Otherwise, it keeps sending NACK as feedback. If maximum number of HARQ attempts are reached for a TB and if UE is still not able to decode TB correctly, the BS sends it to UE via RLC protocol. Method I-A avoids multiple retransmissions on receiving a NACK for the selected HARQ process.
This improved OLLA Method increases the SINR by OLLA step-up factor only for a single HARQ process selected randomly from the N parallel HARQ processes. Note that this method only considers those HARQ processes that are ready to begin transmitting a new TB and are not retransmitting TBs, while selecting this random HARQ process to monitor.
An additional policy is provided where SINR is increased by OLLA step-up factor for this randomly chosen HARQ process only if the last feedback received from that UE was ACK before increasing OLLA SINR for this randomly chosen HARQ process. Note this previous feedback from the UE could have been for any other HARQ process too but it is the latest feedback which is considered in this policy. Here, only those feedback messages are considered where feedback received is ACK for the first transmission attempt of a TB.
As an alternate policy this OLLA SINR is increased only if step-up factor (for OLLA SINR updates) is much smaller than step-down factor.
Apply an OLLA Step-up factor (denoted as StepUp below) to OLLA SINR for that HARQ process alone.

$$NEW\ SINR_{OLLA} = SINR_{OLLA} + OLLA\ StepUp$$

LA will use this New OLLA SINR ($NEW\ SINR_{OLLA}$) to determine the MCS for this HARQ process. (Note: all other process uses old OLLA SINR).
This improved OLLA method will then wait for HARQ feedback for the selected HARQ process.
If HARQ ACK is received as part of this feedback from the receiver, SINR for all HARQ processes (that are doing new transmissions) is increased by the OLLA step-up factor. On the other end, if NACK is received from the receiver, then SINR of all processes is reduced by the OLLA step-down factor. For feedback received on a monitored HARQ process,

When ACK is reported,

$$SINR_{OLLA} = SINR_{OLLA} + OLLA\ StepUp$$

When NACK is reported,

$$SINR_{OLLA} = SINR_{OLLA} - OLLA\ StepDown$$

LA will use this OLLA SINR ($SINR_{OLLA}$) to determine the MCS for all new transmissions in all HARQ transmissions.

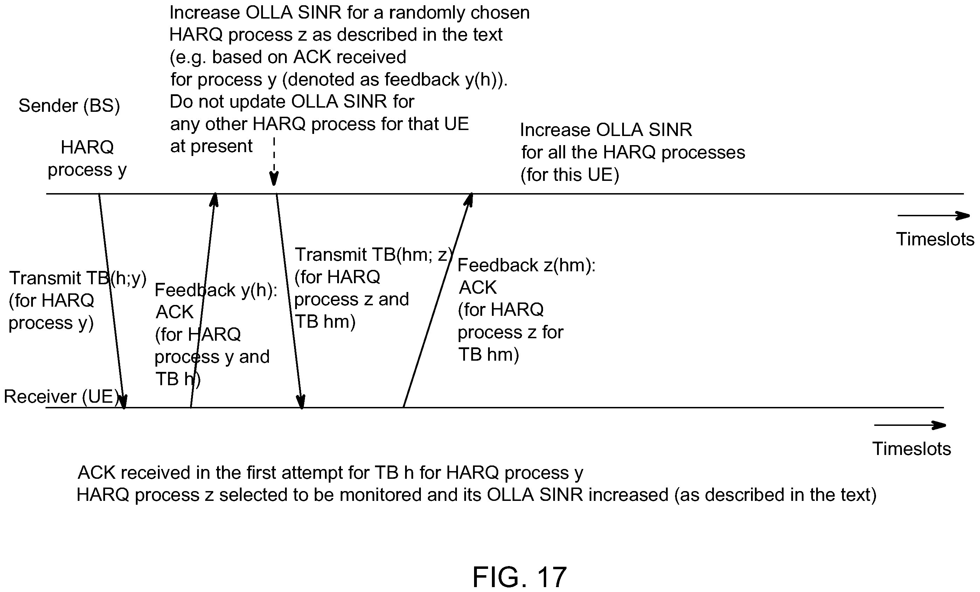

This procedure is repeated by selecting another HARQ process for monitoring and increasing the SINR of the process as described above. An example with method I-A is shown in FIG. 17. This includes the following:

1) HARQ process y from the sender (i.e. BS) transmits a new transport block TB (h; y) to receiver. Here, TB (h; y) denotes TB h sent by HARQ process y.

2) Sender (i.e., BS in this example) receives feedback for TB h for HARQ process y, denoted as feedback y (h), after few slots from the receiver and this feedback indicates ACK. Note that ACK is received in the first attempt for this process y.

3) Sender processes this feedback y (h). Note that other HARQ processes can continue to send data between the time sender sent TB (h; y) and the time when sender has processed the feedback.

4) If feedback y (h) is NACK (i.e., receiver indicated that it could not decode TB h correctly from HARQ process y), sender decides to apply OLLA step-down factor to all the HARQ processes.

5) If feedback y (h) is ACK, as shown in FIG. 17, (i.e., receiver indicated that it received TB h correctly from HARQ process y), sender selects a HARQ process at random for that UE. The sender considers only those processes (while choosing this process), which are ready to send new TBs and does not consider HARQ processes that are retransmitting an earlier sent TB. Additional policies can also be applied while choosing this process. This randomly chosen HARQ process is denoted by HARQ process z in FIG. 17. The sender updates OLLA SINR for this process z using the step-up factor and transmits TB hm to the receiver (e.g., with increased MCS in this case)

6) Sender receives feedback z (hm) from the receiver for process z for TB hm.

7) As feedback is received for process z is ACK, it decides to apply OLLA step-up factor to all the HARQ processes as is the case shown in FIG. 17. On the other end, if feedback z (hm) is NACK (i.e., receiver indicated that it received TB hm wrongly from HARQ process z), the sender decides to apply OLLA step-down factor to all the HARQ processes.

8) As noted earlier, this step is repeated by selecting a HARQ process for monitoring after SINR updates above and when new data is scheduled to be transmitted (from sender to receiver).

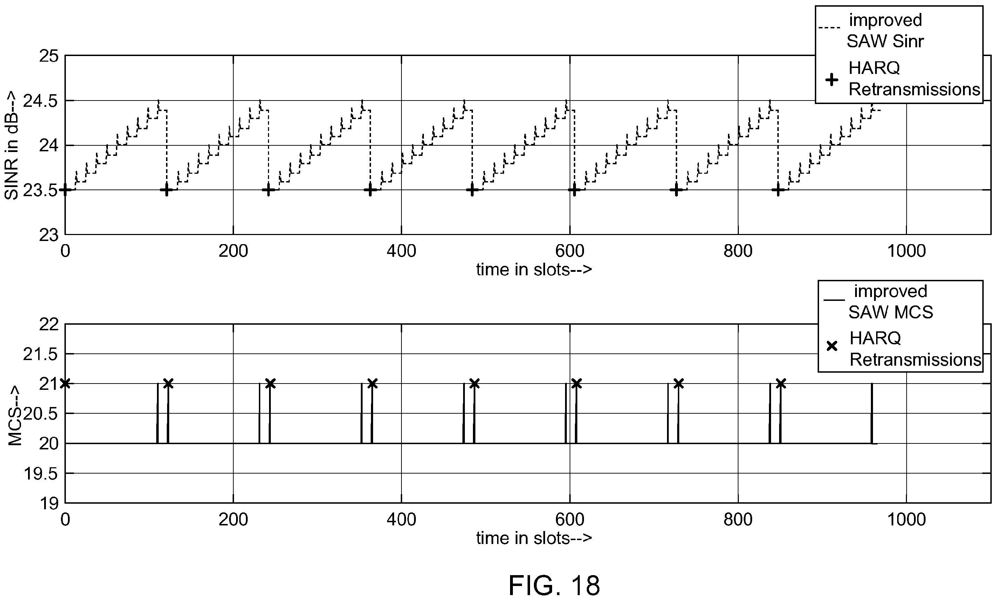

The packet needs to be retransmitted a lower number of times compared to the earlier stop and wait OLLA method. For example, it can result in 1 retransmission (for N processes) and BLER can be reduced to target BLER/N. For target SINR of 10%, when N is high BLER reduces to less than 1%. An example is shown in FIG. 18. Throughput improvement of up to 9% can be realized in the system shown in FIG. 18.

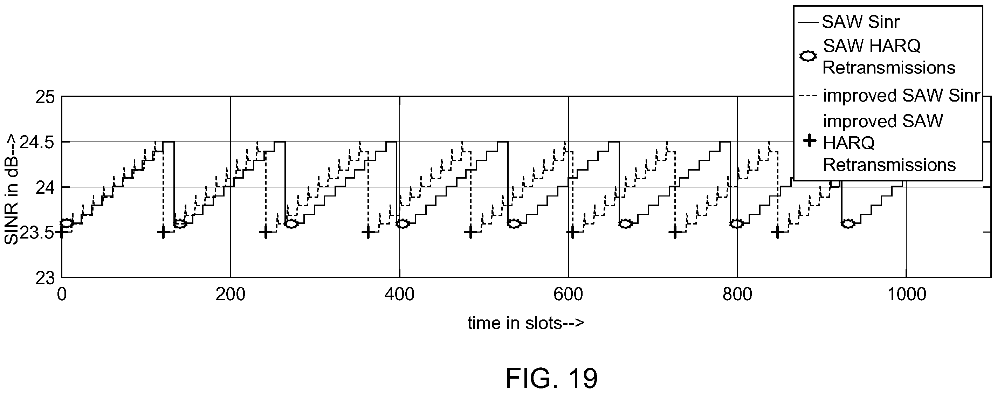

FIG. 19 illustrates a comparison between old methods (OLLA stop and wait) and method I-A. It shows that SINR improves faster with Method I-A due to lower retransmissions.

As another optimization (e.g., for URLLC), a HARQ process can be selected, and dummy data can be transmitted to get HARQ feedback for using it for method I-A. In this case, retransmission of this (dummy) data is not required.

For FDD systems, since all slots are the same in terms of block error probability, the first new transmission after an update can be picked up for monitoring. In TDD systems due to special slots, multiplexing of HARQ feedback etc. the HARQ process needs to be randomly selected. This is due to the following factors: 1) In TDD systems some slots like special slots have very different error probability compared to normal DL slots; and 2) In TDD systems the number of UL slots is different from number of DL slots, receiver multiplex HARQ feedback from multiple DL slots (HARQ process) in one UL slot etc. or vice versa. The update at the sender happens at the same slot every time for all these HARQ process, which results in the HARQ process selected corresponding to a specific slot.

Method I-B. This method allows the operator to apply various types of policies. Downlink is again considered in describing this method though it is applicable for uplink too. This method is used to improve accuracy of method I-A for link adaptation.

In a configuration of this method, a maximum allowed HARQ processes at the sender (i.e., BS) is N for a receiver (i.e. UE). This method I-B first increases the SINR by OLLA step-up factor for 'r' HARQ processes selected randomly from the N parallel HARQ processes. Here 'r' is equal to or greater than 1 and less than or equal to N. Note that this method considers those 'r' HARQ processes which are ready to begin transmitting a new TB and are not retransmitting TBs, while selecting this random HARQ process to monitor.

An additional policy is provided where SINR is increased by OLLA step-up factor for these randomly chosen 'r' HARQ processes only if the last feedback received from that UE was ACK before increasing OLLA SINR for any of these randomly chosen HARQ processes. Note this previous feedback from the UE could have been for any other HARQ process but it is the latest feedback that is considered in this policy. Here, only those feedback messages are considered where feedback received is ACK for the first transmission attempt of a TB.

As an alternative policy this OLLA SINR is increased only if a step-up factor (for OLLA SINR updates) is much smaller than a step-down factor. To select 'r' HARQ processes out of 'N' HARQ processes, this method provides some other options (in addition to above), such as choosing process that see different SINR conditions, e.g., processes which are transmitting in the TDD Special slots or in the slots which see different Interference profile or the slots transmitting MIBs, SIBs etc.

Thus, Method I-B applies the OLLA Step-up factor (denoted as StepUp below) to OLLA SINR for each of the above selected r HARQ processes as below:

$$NEW\ SINR_{OLLA} = SINR_{OLLA} + OLLA\ StepUp$$

LA will use this New OLLA SINR ($NEW\ SINR_{OLLA}$) to determine the MCS for these r HARQ process. (Note: all other HARQ processes continue to use old OLLA SINR for that UE).

As an example, assume that the sender receives ACK for r1 of these r HARQ processes from the receiver. Here, 'r1' is less than or equal to 'r'. If 'r1' divided by 'r' is equal to or above a threshold, method I-B updates OLLA SINR and increases OLLA SINR for all the other 'N minus r' HARQ processes (which are doing new transmissions) and uses this to determine MCS for all the HARQ processes for that UE. Otherwise (i.e., if 'r1' divided by 'r' is below a threshold), method I-B reduces OLLA SINR for these 'r' processes and it either reduces OLLA SINR for other 'N minus r' processes (as part of one policy to ensure higher reliability, e.g., for URLLC applications or eMBB applications with high reliability requirements) or it doesn't change OLLA SINR for other 'N minus r' HARQ processes (e.g., for eMBB applications with not very high reliability requirements). The above procedure is repeated by selecting r HARQ processes for monitoring and updating the SINR of the processes as described above.

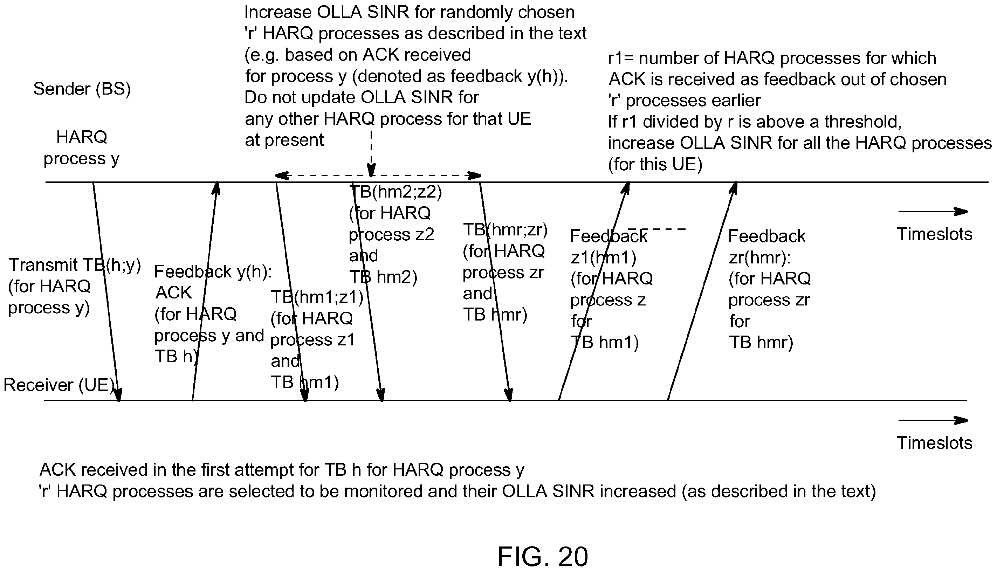

An example is shown in FIG. 20. This includes the following:

1) HARQ process y from the sender (i.e., BS) transmits a new transport block TB (h; y) to receiver. Here, TB (h; y) denotes TB h sent by HARQ process y.

2) Sender (i.e., BS in this example) receives feedback for TB h for HARQ process y, denoted as feedback y(h), after few slots from the receiver and this feedback indicates ACK. Note that ACK is received in the first attempt for this process y. Sender processes this feedback y(h).

3) If feedback y(h) is ACK, as shown in FIG. 17, the sender selects 'r' HARQ process at random (denoted as z1, z2, ..., zr) for that UE. As described earlier, the sender considers only those processes (while choosing this process) that are ready to send new TBs and does not consider HARQ processes that are retransmitting an earlier sent TB. As discussed earlier, additional policies can also be applied while choosing these 'r' processes.

4) Sender updates (i.e., increases in this example) OLLA SINR for these 'r' processes using the step-up factor and transmits TBs to the receiver (e.g., TB hm1 for process z1, TB hm2 for process z2, ...., TB hmr for process zr).

5) Sender receives feedback z(hm1), z(hm2), ..., z(hmr) for these 'r' HARQ processes from the receiver.

6) Assume the sender receives ACK for r1 of these r HARQ processes from the receiver. If 'r1' divided by 'r' is equal to or above a threshold, method I-B updates OLLA SINR and increases OLLA SINR for all the other 'N minus r' HARQ processes (which are doing new transmissions) and uses this to determine MCS for all the HARQ processes for that UE. This is the case shown in FIG. 20.

7) As noted earlier, this step is repeated by selecting r HARQ process for monitoring after SINR updates above and when new data is scheduled to be transmitted (from sender to receiver) for these r HARQ processes.

Method I-C. This method is like method I-B but applies different OLLA SINR step-up factors to the 'r' processes which are chosen to be monitored. This is illustrated with an example using two levels of step-up factors. In this example, it could use OLLA step-up factor of sf1 (e.g., 0.1 dB) for s1 HARQ processes and sf2 (e.g., 0.2 dB) for s2 of these HARQ processes (with s1 + s2 = r).

Assume that the sender receives ACK for r1 of these r HARQ processes from the receiver. This method allows for the application of various policies with different objectives. An example policy is as follows:

1) If ACKs were received for all the 's1' processes but at least one NACK was received for one of the processes from the pool of 's2' processes, method I-C decreases OLLA SINR for all the s2 processes and increases OLLA SINR for other 'N minus r' processes by the step-up factor, which was used for s1 processes (i.e., using step-up factor, sf1).

2) If ACKs were received for all the 's1' and 's2' processes above, method I-C increases OLLA for other 'N minus r' processes by the step-up factor used for 's2' process (i.e., using step-up factor, sf2) and increases OLLA SINR for s1 processes. This helps to meet high reliability requirements but also keeps throughput relatively high at the same time.

Method I-D. To reduce the delay due to the retransmission, LA can choose to proactively retransmit the data for the selected HARQ process in subsequent slots without waiting for HARQ feedback. In the case of mini slot transmission, this retransmission can be in the same slot. This retransmission decision can be based on confidence level the link adaptation method has regarding the selected MCS and delay requirement of the data packet.

For example, a high MCS chosen for the observed HARQ process of a UE is has low probability of error based on previous successful transmission with that MCS, and LA does not proactively schedule retransmission of the packet.

In another example, a UE is scheduled with a new higher MCS for the first time and there is no information LA has whether UE can support this MCS or not. In that case, LA will retransmit the data in the next slot so that delay due to retransmission is minimized.

Note that the Methods I-A, I-B, I-C and I-D can be used with other link adaptation methods also and are not restricted to the stop and wait OLLA. Also, as discussed earlier, these are applicable for downlink as well as uplink.

Method I-E (near-RT-RIC based OLLA Method and parameter selection). In this method, various parameters related to method I-C are communicated from DU to near-RT-RIC using the E2 interface. For example, for method I-D, the following parameters are communicated from the DU to the near-RT-RIC (for DL link adaptation) for each cell, each UE and each DRB:

1) CSI being reported by UEs (in a given cell);

2) The number of randomly chosen HARQ process by each UE (i.e., 'r' as denoted in method I-C);

3) The Group of chosen HARQ processes from these 'r' process (i.e., 's1' and 's2' from method I-C);

4) The different OLLA SINR step-up factors used for these HARQ processes (i.e., step-factor 'sf1' and 'sf2' from method I-C);

5) The value of OLLA SINR step-down factors;

6) BLER being overserved for each DRB (for each UE);

7) Initial BLER target for each DRB;

8) Throughput observed for each DRB (e.g., as measured at DU);

9) RLC queue delay for each DRB at DU;

10) QoS indicator (such as 5QI) of the DRB; and

11) related parameters as described in method I-C.

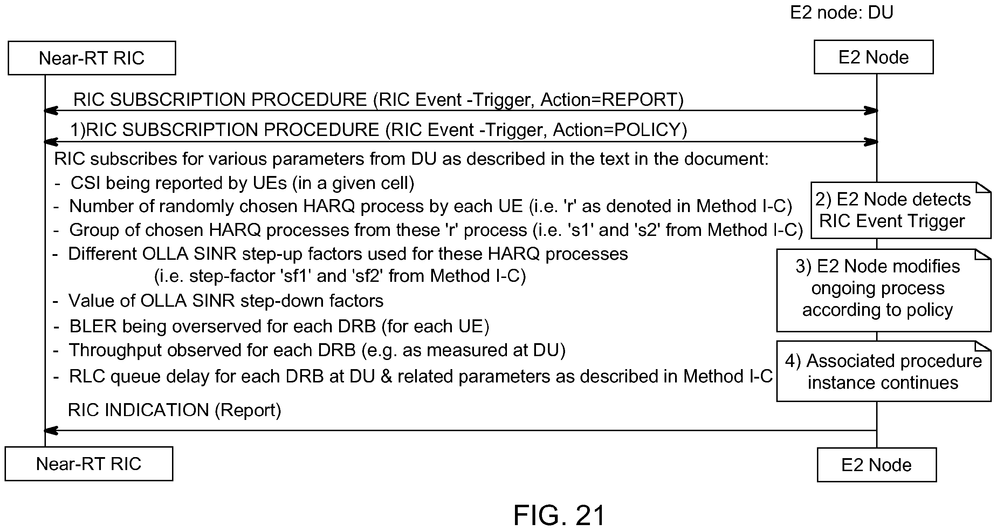

As shown in FIG. 21, the E2 interface is enhanced to carry these parameters. Near-RT-RIC keeps analyzing these parameters and recommends suitable values of these parameters, which are communicated to DU (as part of a POLICY). The E2 interface is also enhanced for this purpose. A similar procedure is carried out for uplink link adaptation also.

It should be noted that these methods can be detected by examining the UE logs, if enabled.

Method I-A: BS schedules a transmission with higher MCS for a single HARQ process, all other processes are scheduled with a lower MCS. Once the HARQ feedback is available at BS, and feedback is ACK BS transmit with higher MCS for all other processes. If feedback is NACK, BS stays with current MCS or reduces the MCS.

Method I-B & 1-C: BS schedules a transmission with higher MCS for r HARQ process, all other processes are scheduled with a lower MCS. Once the HARQ feedback is available at BS, and feedback is ACK for at least r1 HARQ process, BS starts scheduling transmission with higher MCS for all other processes. If ACKs are less than r1, BS stays with current MCS or reduces the MCS for all HARQ process.

Method 1-D: if BS chooses immediate retransmission, it can be determined from UE PDCCH logs, consecutive slots scheduling of the same HARQ process with different RVIDs (transmission and retransmission) without waiting for HARQ feedback.

Method 1-E: If RIC chooses one of the following methods, the first or second LA method, method 1-A, method 1-B, method 1-C, or method 1-D at a time, then the specific method can be identified from UE side log analysis. Different methods used at different times can be identified from UE side logs.

Method II (LA improvement for eMBB / URLLC scenarios with PDCP Duplication). For applications with higher reliability requirements (such as URLLC' or 'eMBB applications with high reliability requirements'), PDCP packets can be duplicated for a DRB for higher reliability. These duplicated packets are typically sent through multiple radio links (as shown in FIG. 16). As these links have independent radio channels, chances of duplicate packets failing are minimal provided very conservative MCS is used while transmitting packets over these links. It improves reliability but results in wastage of network resources. A method is proposed to meet reliability constraints but reduce the wastage of network resources (e.g., PRBs over the air-interface) and thus improve the capacity of each cell. The method for PDCP replication is described in connection with the downlink direction.

As part of this Method, near-RT-RIC subscribes to link adaptation and other performance related parameters from MN as well as SN nodes. For each of these MN and SN nodes, various parameters as discussed in connection with method I-E are used. This Method II also includes additional parameters to indicate whether a DRB is carrying duplicated PDCP PDUs and identity of SN node for each such DRB through which replicated PDCP PDUs of a DRB are being sent.

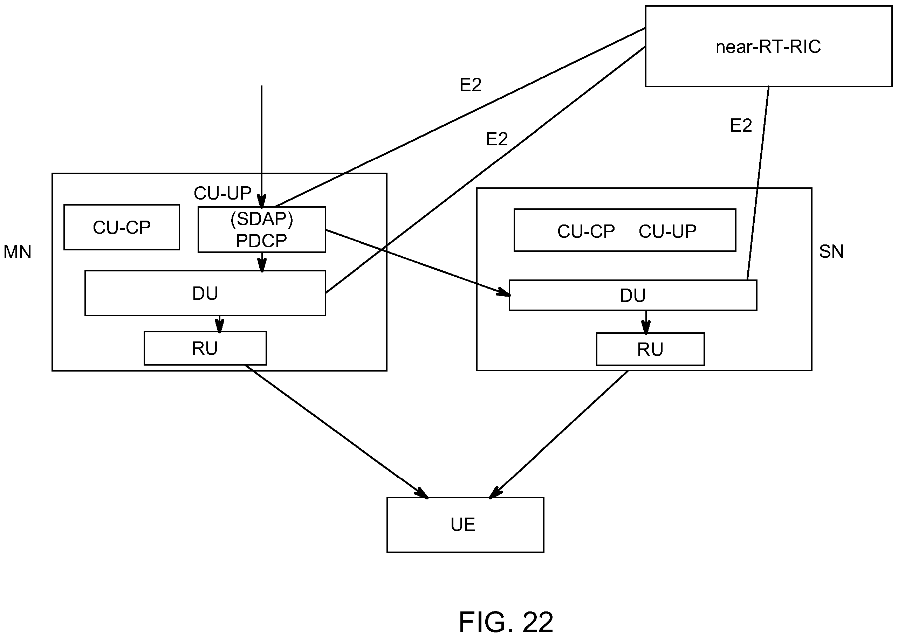

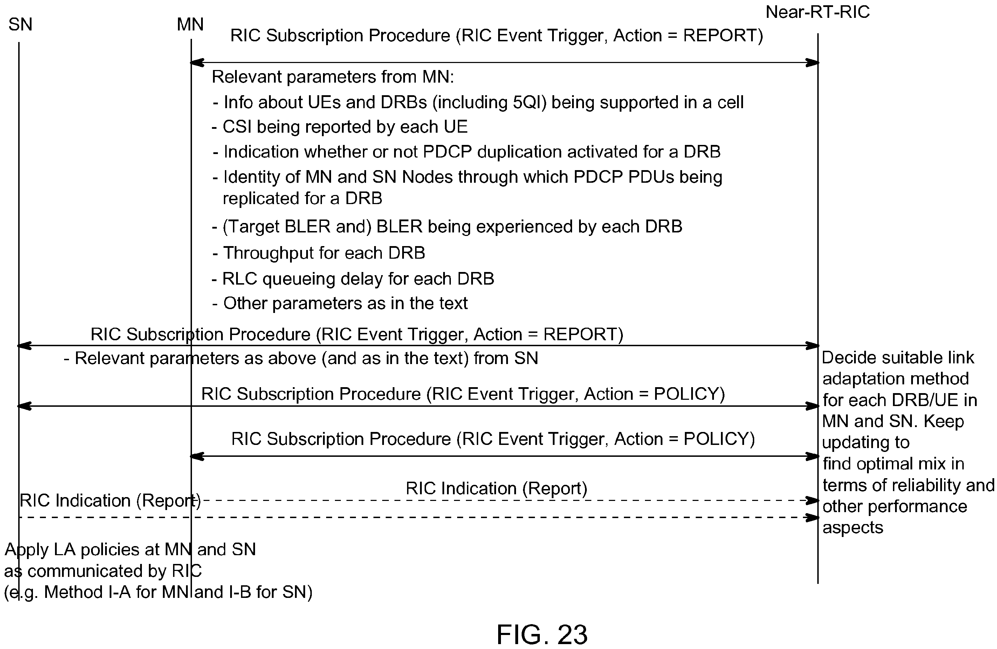

FIGS. 22 and 23 show some of the steps involved in this method. The near-RT-RIC continues to analyze various parameters it gets from MN and SN nodes for each DRB and each UE for a given cell. For DRBs where PDCP PDUs are replicated and sent via a given pair of MN and SN nodes (and the corresponding cells), near-RT-RIC helps apply to various policies, which can help improve network resource utilization without violating reliability constraints.

For example, if near-RT-RIC module finds that it is becoming challenging to meet reliability constraints for a given DRB (which could happen due to interference on the corresponding carrier) via radio link from SN, but it is able to meet reliability constraints (relatively easily) via MN Node, it can recommend applying the first LA method for SN and OLLA Method I-A for MN. Use of Method I-A (instead of Method A) for MN helps to achieve better resource utilization on the MN leg, and use of Method A for SN and Method I-A for MN leg helps to meet reliability targets for that DRB too.

As another example, MN and SN are using method I-A for link adaptation for a DRB for which PDCP replication has been activated and reliability targets are being met. At some point in time, it starts becoming more difficult to meet reliability targets in one of the legs (e.g., the MN leg). In this case, near-RT-RIC decides to switch link adaptation method of MN from method I-A to I-B to improve changes of meeting reliability targets.

In yet another example, MN and SN are using method I-A for link adaptation for a DRB for which PDCP replication has been activated and reliability targets are being met. Near-RT-RIC keeps evaluating it and finds that it should be possible to keep meeting reliability targets in near future even if a more aggressive link adaptation method is used for one of the legs (i.e., either MN or SN) and this will help in improving resource utilization in that leg (and additional resources can be used by other applications). In this case, near-RT-RIC recommends using method I-C (which can potentially use higher OLLA SINR step-up size) for one of the legs and continues to use method I-A for the other leg.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

**Claims**

1. A method for optimizing data transmission rates in telecom systems requiring high reliability, the method comprising the steps of:

   providing a transmitter having one Hybrid Automatic Repeat Request (HARQ) entity per receiver, wherein the transmitter comprises a base station and a receiver comprises User Equipment (UE), or the transmitter comprises UE and the receiver comprises a base station;
   wherein the base station has a scheduler determining a Signal to Interference and Noise ratio (SINR) and Modulation and Coding Scheme (MCS) to be used for transmission;
   supporting N number of multiple parallel HARQ processes with each HARQ entity, wherein there is a maximum number of retransmissions of a Transport Block (TB) that can be attempted with a HARQ protocol;
   decoding a TB with the receiver;
   transmitting a HARQ acknowledgement (ACK) from the receiver to the transmitter when the receiver decodes the TB correctly before the maximum number of HARQ retransmissions is reached;
   transmitting a HARQ negative acknowledgement (NACK) from the receiver to the transmitter when the receiver cannot decode the TB correctly for each of the transmission/retransmission before the maximum number of HARQ retransmissions is reached;
   wherein the base station decides one of
   increasing the SINR of a single HARQ process by outer loop link adaptation (OLLA) step-up factor for the single HARQ process selected randomly from the N parallel HARQ processes; and
   increasing the SINR by OLLA step-up factor for 'r' HARQ processes selected randomly from the N parallel HARQ processes, where 'r' is equal to or greater than 1 and less than N and only a 'r' HARQ process that is ready to begin transmitting a new TB and is not retransmitting a TB is selected;
   wherein the base station observes HARQ feedback for selected HARQ processes and decides the SINR for the selected one or 'r' HARQ processes and remaining HARQ processes.

2. The method according to claim 1, wherein SINR is increased by OLLA step-up factor for the chosen 'r' HARQ process only if a last feedback received from the UE was ACK before increasing OLLA SINR for any of the chosen HARQ processes.

3. The method according to claim 1, wherein SINR is increased by OLLA step-up factor for the chosen single HARQ process only if the step-up factor for OLLA SINR updates is smaller than a step-down factor.

4. The method according to claim 1, further comprising the step of:

   receiving at the transmitter ACK for 'r1' of r HARQ processes from the receiver, where 'r1' is less than or equal to 'r';
   wherein if 'r1' divided by 'r' is equal to or above a threshold:

   increasing OLLA SINR for all other 'N minus r' HARQ processes;
   determining Modulation and coding scheme (MCS) for all HARQ processes for the UE based on the increased OLLA SINR;
   wherein if 'r1' divided by 'r' is below the threshold:
   decreasing OLLA SINR for the 'r' processes and either reducing OLLA SINR for other 'N minus r' HARQ processes or maintaining OLLA SINR unchanged for the other 'N minus r' HARQ processes.

5. The method according to claim 4, further comprising the steps of:

   providing a first OLLA step-up factor of sf1 for s1 HARQ processes;
   providing a second OLLA step-up factor of sf2 for s2 HARQ processes, where s1 + s2 = 'r'; and
   receiving ACK for 'r1' of the 'r' HARQ processes from the receiver.

6. The method according to claim 5, wherein,
   if ACKs were received for all the 's1' processes but at least one NACK was received for one of the processes from a pool of 's2' processes, the method comprises the step of:

   decreasing OLLA SINR for all the s2 processes and increasing OLLA SINR for other 'N minus r' processes by the step-up factor, which was used for s1 processes; or

if ACKs were received for all the 's1' and 's2' processes, the method comprises the step of:

increasing OLLA for other 'N minus r' processes by the step-up factor used for 's2' process and increasing OLLA SINR for s1 processes.

7.  The method according to claim 1, further comprising the steps of:

transmitting parameters from a distributed unit (DU) to a near real-time Radio Access Network Intelligent Controller (near-RT-RIC) using an E2 interface for each cell, each UE and each Data Radio Bearer (DRB), the parameters selected from the group consisting of:

 a) Channel State Information (CSI) being reported by UEs in a given cell,
 b) a number of HARQ processes chosen by each UE,
 c) a group of chosen HARQ processes from the 'r' process,
 d) different OLLA SINR step-up factors used for the HARQ processes,
 e) a value of OLLA SINR step-down factors,
 f) Block Error Rate (BLER) being overserved for each DRB for each UE,
 g) initial BLER target for each DRB,
 h) throughput observed for each DRB as measured at the DU,
 i) Radio Link Control (RLC) queue delay for each DRB at the DU,
 j) Quality of Service (QoS) indicators of the DRB, and
 k) combinations thereof.

8.  The method according to claim 7, further comprising the steps of:

duplicating Packet Data Convergence Protocol (PDCP) packets for a DRB; and transmitting the duplicated packets through multiple radio links.

9.  The method according to claim 8, the near-RT-RIC subscribes to link adaptation and performance-related parameters from a Master Node (MN) and a Secondary Node (SN).

10.  The method according to claim 9, wherein the parameters further include:

an indication whether a DRB is carrying a duplicated PDCP PDUs; and
an identity of a SN for each such DRB through which replicated PDCP PDUs of a DRB are being sent.

11.  The method according to claim 10, wherein the near-RT-RIC suggests different Link Adaptation (LA) methods for the MN and the SN to meet reliability constraints of respective radio links.

12.  The method according to claim 11, wherein when there is a packet failure in only one of the links, the scheduler does not retransmit.

13.  The method according to claim 7, further comprising the steps of:

duplicating Packet Data Convergence Protocol (PDCP) packets of a DRB using a radio link; and
transmitting the duplicated packets through the same radio link in separate transport blocks in different slots.

14.  The method according to claim 1, further comprising the step of the transmitter retransmitting data from a selected HARQ process in subsequent slots without waiting for HARQ feedback to be received.

15.  The method according to claim 1, further comprising the step of dummy transmission for URLLC with increased SINR and no retransmission even if the dummy transmission received NACK is missing.

FIG. 1

FIG. 2

EP 4 622 153 A1

FIG. 3

FIG. 4

FIG. 5

FIG. 6A

EP 4 622 153 A1

FIG. 6B

FIG. 7

EP 4 622 153 A1

FIG. 8

EP 4 622 153 A1

FIG. 9

UE x      gNodeB (RU, DU, CU)      UPE    DNN
(e.g for internet services)

PDU Session I for UE x. Slice id s1 (SST,SD)

DRB y1     NG-U: GTP-U tunnel for PDU session 1    IP Flows
QFI q1 (with 5QI h1 for non-GBR)

QFI q2 (with 5QI h2 for non-GBR)

DRB y2

QFI q3 (with 5QI h3 for GBR)

DNN
(for IMS
services)

PDU Session II for UE x. Slice id s2

DRB z1     NG-U: GTP-U tunnel for PDU session 2
QFI q4 (with 5QI h4 for GBR)
QFI q5 (with 5QI h5 for GBR)

DNN: Data Network Name, QFI: QoS Flow Identifier, UPF: User Plane Function (of 5G Core), 5QI: 5G QoS Identifier,
DRB: Data Radio Bearer, GBR: Guaranteed Bit Rate, SST: Slice / Service Type, SDD: Slice Differentiator

FIG. 10

EP 4 622 153 A1

| Characteristic parameter | | | | |
|---|---|---|---|---|
| Communication service availability: target value (note 1) | Communication service reliability: mean time between failures | End-to-end latency: maximum (note 2) (note 12a) | Service bit rate: user experienced data rate (note 12a) | Message size [byte] (note 12a) |
| 99.999 % to 99.999 99 % | ~ 10 years | < transfer interval value | – | 50 |
| 99.999 9 % to 99.999 999 % | ~ 10 years | < transfer interval value | – | 40 |
| 99.999 9 % to 99.999 999 % | ~ 10 years | < transfer interval value | – | 10 |
| 99.999 9 % | – | < 5 ms | 1 kbit/s (steady state) 1.5 Mbit/s (Fault Case) | < 1,500 |
| 99.999 9 % to 99.999 999 % | ~ 10 years | < transfer interval value | | 1k |
| 99.999 9 % to 99.999 999 % | ~ 10 years | < transfer interval value (note 5) | 50 Mbit/s | |
| 99.999 9 % to 99.999 999 % | ~ 10 years | < transfer interval value (note 5) | 250 Mbit/s | |
| 99.999 9 % to 99.999 999 % | ~ 10 years | < transfer interval value | | 1k |
| > 99.999 9 % | ~ 10 years | < transfer interval value | – | 40 to 250 |
| 99.999 9 % to 99.999 999 % | ~ 1 month | < transfer interval value | – | 40 to 250 |

Ⓐ

## FIG. 11

| Influence quantity | | | | | |
|---|---|---|---|---|---|
| Transfer intervel: Target value (note 12a) | Survival time (note 12a) | UE speed (note 13) | # of UEs | Service area (note 3) | Remarks |
| 500 µs | 500 µs | ≤ 75 km/h | ≤ 20 | 50 m x 10 m x 10 m | Motion control (A.2.2.1) |
| 1 ms | 1 ms | ≤ 75 km/h | ≤ 50 | 50 m x 10 m x 10 m | Motion control (A.2.2.1) |
| 2 ms | 2 ms | ≤ 75 km/h | ≤ 100 | 50 m x 10 m x 10 m | Motion control (A.2.2.1) |
| < 60 s (steady state) ≥ 1 ms (fault Case) | transfer interval | stationary | 20 | 30 km x 20 km | Electrical Distribution - Distributed automated switching for isolation and service restoration (A.4.4); (note 5) |
| ≤ 10 ms | 10 ms | – | 5 to 10 | 100 m x 30 m x 10 m | Control-to-control in motion control (A.2.2.2); (note 9) |
| ≤ 1 ms | 3 x transfer interval | stationary | 2 to 5 | 100 m x 30 m x 10 m | Wired 2-wireless 100 Mbit/s link replacement (A.2.2.4) |
| ≤ 1 ms | 3 x transfer interval | stationary | 2 to 5 | 100 m x 30 m x 10 m | Wired 2-wireless 1Gbit/s link replacement (A.2.2.4) |
| ≤ 50 ms | 50 ms | – | 5 to 10 | 1,000 m x 30 m x 10 m | Control-to-control in motion control (A.2.2.2);(note 9) |
| 1 ms to 50 ms (note 6) (note 7) | transfer interval value | ≤ 50 km/h | ≤ 2,000 | ≤ 1 km$^2$ | Mobile robots (A.2.2.3) |
| 4 ms to 8 ms (note 7) | transfer interval value | ≤ 8 km/h (linear move ment) | TBD | 50 m x 10 m x 4 m | Mobile control panels - remote control of e.g. assembly robots milling machines A.2.4.1);(note 9) |

FIG. 11(Cont.)

Downlink(DL) IP Packets

UPF (as part of 5G core network)

One GTP-U tunnel per
PDU session between
UPF and CU-UP

(e.g. 10s or 100s of thousands
(of PDU sessions and
DRBs per CU-UP)

SDAP at CU-UP:QoS
flows mapped to DRBs

PDU
Session 1

PDU
Session 2

CU-UP:
SDAP,
PDCP

One GTP-U tunnel per
DRB between CU-UP and DU

DRB1    DRB2       DRB3       DRB4

(e.g. Thousands of DRBs per DU)

DU:RLC,
MAC,
PHY(upper parts)

One (logical) RLC queue per DRB
(or per logical channel)

MAC Scheduler

PHY (upper parts)

RU

UE x1    UE x2    UE x3    UE xm    UE xn

FIG. 12

EP 4 622 153 A1

MCS in UL vs Time Sot

FIG. 13

EP 4 622 153 A1

Selected HARQ process that is being monitored as part of Method B (at a given point of time)

NO OLLA step-up or step-down factors applied to any HARQ process during this interval

Update SINR based on feedback (ACK / NACK) received and apply this to all HARQ processes that are active at that time

sender

Processing at sender

Timeslots

Transmit Transport block

ACK/ NACK

Retransmit or new transmit

Receiver

Processing at receiver

FIG. 14

EP 4 622 153 A1

FIG. 15

```
┌─────────────────────────────────┐          ┌─────────────────────────────────┐
│      ┌─────────────┐            │          │                                 │
│      │    SDAP     │  PDCP PDU  │          │                                 │
│      └─────────────┘  Duplication│          │                                 │
│            │                     │          │                                 │
│            ▼                     │          │                                 │
│      ┌─────────────┐            │          │      ┌─────────────┐            │
│      │   NR PDCP   │────────────┼──────────┼─────▶│   SN RLC    │            │
│      └─────────────┘            │          │      └─────────────┘            │
│            │                     │    Xn    │            │                     │
│            ▼                     │  ◀────▶  │            ▼                     │
│      ┌─────────────┐            │          │      ┌─────────────┐            │
│      │   MN RLC    │            │          │      │   SN MAC    │            │
│      └─────────────┘            │          │      └─────────────┘            │
│            │                     │          │            │                     │
│            ▼                     │          │            ▼                     │
│      ┌─────────────┐            │          │      ┌─────────────┐            │
│      │   MN MAC    │            │          │      │   SN PHY    │            │
│      └─────────────┘            │          │      └─────────────┘            │
│            │                     │          │                                 │
│            ▼                     │          │                                 │
│      ┌─────────────┐            │          │                                 │
│      │   MN PHY    │            │          │                                 │
│      └─────────────┘            │          │                                 │
└─────────────────────────────────┘          └─────────────────────────────────┘
         Carrier 1                                   Carrier 2
                  ┌──────────────┐
                  │      UE      │
                  └──────────────┘
```

FIG. 16

Sender (BS)

HARQ process y

Increase OLLA SINR for a randomly chosen HARQ process z as described in the text (e.g. based on ACK received for process y (denoted as feedback y(h)). Do not update OLLA SINR for any other HARQ process for that UE at present

Increase OLLA SINR for all the HARQ processes (for this UE)

Timeslots

Transmit TB(h;y) (for HARQ process y)

Feedback y(h): ACK (for HARQ process y and TB h)

Transmit TB(hm; z) (for HARQ process z and TB hm)

Feedback z(hm): ACK (for HARQ process z for TB hm)

Receiver (UE)

Timeslots

ACK received in the first attempt for TB h for HARQ process y HARQ process z selected to be monitored and its OLLA SINR increased (as described in the text)

FIG. 17

EP 4 622 153 A1

FIG. 18

EP 4 622 153 A1

FIG. 19

Increase OLLA SINR for randomly chosen
'r' HARQ processes as described in the text
(e.g. based on ACK received
for process y (denoted as feedback y(h)).
Do not update OLLA SINR for
any other HARQ process for that UE
at present

r1= number of HARQ processes for which
ACK is received as feedback out of chosen
'r' processes earlier
If r1 divided by r is above a threshold,
increase OLLA SINR for all the HARQ processes
(for this UE)

Sender (BS)

HARQ
process y

Timeslots

TB(hm2;z2)
(for HARQ
process z2
and
TB hm2)

TB(hmr;zr)
(for HARQ
process zr
and
TB hmr)

Feedback
z1(hm1)
(for HARQ
process z
for
TB hm1)

Feedback
zr(hmr):
(for HARQ
process zr
for
TB hmr)

Transmit TB(h;y)
(for HARQ
process y)

Feedback y(h):
ACK
(for HARQ
process y and
TB h)

TB(hm1;z1)
(for HARQ
process z1
and
TB hm1)

Receiver (UE)

Timeslots

ACK received in the first attempt for TB h for HARQ process y
'r' HARQ processes are selected to be monitored and their OLLA SINR increased (as described in the text)

FIG. 20

E2 node: DU

| Near-RT RIC | | E2 Node |

RIC SUBSCRIPTION PROCEDURE (RIC Event -Trigger, Action=REPORT)

1)RIC SUBSCRIPTION PROCEDURE (RIC Event -Trigger, Action=POLICY)

RIC subscribes for various parameters from DU as described in the text in the document:
- CSI being reported by UEs (in a given cell)
- Number of randomly chosen HARQ process by each UE (i.e. 'r' as denoted in Method I-C)
- Group of chosen HARQ processes from these 'r' process (i.e. 's1' and 's2' from Method I-C)
- Different OLLA SINR step-up factors used for these HARQ processes
         (i.e. step-factor 'sf1' and 'sf2' from Method I-C)
- Value of OLLA SINR step-down factors
- BLER being overserved for each DRB (for each UE)
- Throughput observed for each DRB (e.g. as measured at DU)
- RLC queue delay for each DRB at DU & related parameters as described in Method I-C

RIC INDICATION (Report)

2) E2 Node detects RIC Event Trigger

3) E2 Node modifies ongoing process according to policy

4) Associated procedure instance continues

| Near-RT RIC | | E2 Node |

FIG. 21

EP 4 622 153 A1

FIG. 22

SN                    MN

RIC Subscription Procedure (RIC Event Trigger, Action = REPORT)

Relevant parameters from MN:

- Info about UEs and DRBs (including 5QI) being supported in a cell
- CSI being reported by each UE
- Indication whether or not PDCP duplication activated for a DRB
- Identity of MN and SN Nodes through which PDCP PDUs being replicated for a DRB
- (Target BLER and) BLER being experienced by each DRB
- Throughput for each DRB
- RLC queueing delay for each DRB
- Other parameters as in the text

RIC Subscription Procedure (RIC Event Trigger, Action = REPORT)

- Relevant parameters as above (and as in the text) from SN

RIC Subscription Procedure (RIC Event Trigger, Action = POLICY)

RIC Subscription Procedure (RIC Event Trigger, Action = POLICY)

RIC Indication (Report)

RIC Indication (Report)

Decide suitable link adaptation method for each DRB/UE in MN and SN. Keep updating to find optimal mix in terms of reliability and other performance aspects

Apply LA policies at MN and SN as communicated by RIC (e.g. Method I-A for MN and I-B for SN)

EP 4 622 153 A1

FIG. 23

**EUROPEAN SEARCH REPORT**

| Application Number |
| --- |
| EP 25 16 4679 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2021/123494 A1 (NOKIA TECHNOLOGIES OY [FI]) 24 June 2021 (2021-06-24) | 1-4,7, 14,15 | INV. H04L1/1812 |
| A | * paragraphs [0006] - [0009], [0258]; figure 2 * | 5,6,8-12 | H04L1/1822 |
| | ----- | | |
| A | US 2022/052823 A1 (XU JUN [CN] ET AL) 17 February 2022 (2022-02-17) * page 12 - page 17 * | 1 | |
| | ----- | | |

**TECHNICAL FIELDS SEARCHED     (IPC)**

H04L

The present search report has been drawn up for all claims

| Place of search | Date of completion of the search | Examiner |
| --- | --- | --- |
| The Hague | 24 July 2025 | Besse, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4679

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | Publication date | Patent family member(s) | | Publication date |
|---|---|---|---|---|
| WO 2021123494 A1 | 24-06-2021 | EP | 4079071 A1 | 26-10-2022 |
| | | WO | 2021123494 A1 | 24-06-2021 |
| US 2022052823 A1 | 17-02-2022 | CN | 105024781 A | 04-11-2015 |
| | | CN | 110266430 A | 20-09-2019 |
| | | EP | 3139529 A1 | 08-03-2017 |
| | | EP | 3734875 A1 | 04-11-2020 |
| | | EP | 4178136 A1 | 10-05-2023 |
| | | ES | 2985496 T3 | 06-11-2024 |
| | | ES | 3008019 T3 | 21-03-2025 |
| | | FI | 3734875 T3 | 07-11-2024 |
| | | PL | 4178136 T3 | 28-04-2025 |
| | | US | 2017141903 A1 | 18-05-2017 |
| | | US | 2020014520 A1 | 09-01-2020 |
| | | US | 2022052823 A1 | 17-02-2022 |
| | | US | 2024322981 A1 | 26-09-2024 |
| | | WO | 2015165166 A1 | 05-11-2015 |

EPO FORM P0459

For more details about this annex : see Official Journal of the European Patent Office, No. 12/82